# EUROPEAN PATENT SPECIFICATION

(11) **EP 3 854 140 B1**
(45) Date of publication and mention of the grant of the patent: **24.05.2023**
(21) Application number: 18779282.5
(22) Date of filing: 18.09.2018
(51) Int. Cl.: H04W 36/00, H04W 36/30, H04W 76/19

(54) **COMMUNICATION CONNECTION CONTROL USING CONDITIONAL HANDOVER**
KOMMUNIKATIONSVERBINDUNGSSTEUERUNG UNTER VERWENDUNG VON BEDINGTEM HANDOVER
CONTRÔLE DE CONNEXION DE COMMUNICATION AU MOYEN D'UN TRANSFERT CONDITIONNEL

(43) Date of publication of application: 28.07.2021
(73) Proprietor: Nokia Technologies Oy, 02610 Espoo (FI)
(72) Inventor: KOZIOL, Dawid, 67-200 Glogow (PL); VIRTEJ, Elena, 02100 Espoo (FI); MALKAMÄKI, Esa Mikael, 02130 Espoo (FI); KESKITALO, Ilkka Antero, 90240 Oulu (FI); TURTINEN, Samuli Heikki, 91100 Ii (FI)
(74) Representative: Nokia EPO representatives
(86) International application number: PCT/EP2018/075216
(87) International publication number: WO 2020/057732

(56) References cited:
- US-A1- 2016 119 862
- US-B2- 9 155 014
- AT&T: "NR-NR DC for 0ms handover interruption time in NR", 3GPP DRAFT; R2-1803555 - NR-NR DC FOR 0MS HANDOVER INTERRUPTION TIME IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. RAN WG2, no. Athens, Greece; 20180226 - 20180302 16 February 2018 (2018-02-16), XP051400584, Retrieved from the Internet: URL:http://www.3gpp.org/ftp/tsg%5Fran/WG2% 5FRL2/TSGR2%5F101/Docs/ [retrieved on 2018-02-16]

## Description

### BACKGROUND

### Field

Examples of embodiments relate to apparatuses, methods, systems, computer programs, computer program products and (non-transitory) computer-readable media usable for conducting a communication connection control of a communication element or function, such as a UE, using a conditional handover procedure, and in particular to apparatuses, methods, systems, computer programs, computer program products and (non-transitory) computer-readable media usable for controlling a communication connection of a communication element enhancing the processing for allowing to keep connection to a communication network.

### Background Art

The following description of background art may include insights, discoveries, understandings or disclosures, or associations, together with disclosures not known to the relevant prior art, to at least some examples of embodiments of the present invention but provided by the invention. Some of such contributions of the invention may be specifically pointed out below, whereas other of such contributions of the invention will be apparent from the related context. US 9 155 014 B2, 3GPP draft R2-180355 from AT&T, published on 2018-02-16, and US 2016/119862 A1 provide background information relating to conditional handover configuration and radio link failure.

The following meanings for the abbreviations used in this specification apply:
- 3GPP: 3^{rd} Generation Partner Project
- 4G: fourth generation
- 5G: fifth generation
- BFR: beam failure recovery
- BH: backhaul
- BS: base station
- CHO: conditional handover
- CN: core network
- CPU: central processing unit
- CSI-RS: channel state information reference signal
- CU: central unit
- DU: distributed unit
- E-UTRAN: evolved UMTS terrestrial radio access network
- eNB: evolved node B
- ETSI: European Telecommunications Standards Institute
- gNB: next generation node B
- HO: handover
- IAB: integrated access and backhaul
- ID: identification
- loT: Internet of things
- IS: in sync
- LTE: Long Term Evolution
- LTE-A: LTE Advanced
- MCS: modulation and coding scheme
- MT: mobile termination
- NG: new generation
- NR: new radio
- OOS: out of sync
- PDCCH: packet data control channel
- PLMN: public land mobile network
- PHY: physical
- RACH: random access channel
- RAN: radio access network
- RAT: radio access technology
- RLC: radio link control
- RLF: radio link failure
- RRC: radio resource control
- RSRP: reference signal received power
- RSRQ: reference signal received quality
- SINR: signal to interference plus noise ratio
- SSB: synchronization signal block
- UE: user equipment
- UMTS: universal mobile telecommunication system

### SUMMARY

The invention is defined by the appended claims.

According to an example of an embodiment, there is provided, for example, an apparatus for use by a first communication network control element or function configured to control a communication connection of at least one communication element or function in a first network area of a communication network, the apparatus comprising at least one processing circuitry, and at least one memory for storing instructions to be executed by the processing circuitry, wherein the at least one memory and the instructions are configured to, with the at least one processing circuitry, cause the apparatus at least: to conduct a processing for a conditional handover procedure of the communication element or function served by the first communication network control element or function, to forward, in the processing for the conditional handover procedure, handover configuration information defining how the conditional handover procedure is to be executed at the communication element or function, wherein the handover configuration information includes instructions for the communication element orfunction, to determine whether a radio link or physical layer issue is present, and in case the presence of the radio link or physical layer issue for the communication connection to the first network area is determined, to conduct a conditional handover preference processing in which an execution of a conditional handover of the communication element or function to another network area is prioritized in comparison to other measures for keeping the communication element or function in connection with the communication network. Furthermore, according to an example of an embodiment, there is provided, for example, a method for use in a first communication network control element or function configured to control a communication connection of at least one communication element orfunction in a first network area of a communication network, the method comprising conducting a processing for a conditional handover procedure of the communication element or function served by the first communication network control element or function, forwarding, in the processing for the conditional handover procedure, handover configuration information defining how the conditional handover procedure is to be executed at the communication element or function, wherein the handover configuration information includes instructions for the communication element or function to determine whether a radio link or physical layer issue is present, and in case the presence of the radio link or physical layer issue for the communication connection to the first network area is determined, to conduct a conditional handover preference processing in which an execution of a conditional handover of the communication element or function to another network area is prioritized in comparison to other measures for keeping the communication element or function in connection with the communication network.

According to further refinements, these examples may include one or more of the following features:
- the handover configuration information may be forwarded in a handover instruction signaling providing a list of at least one candidate target network area for the conditional handover procedure to the communication element of function, or the handover configuration information may be forwarded in a separate signaling independent from the handover instruction signaling;
- the handover configuration information may define, as a conditional handover preference processing, in case a beam failure is determined as the radio link or physical layer issue, to skip a beam failure recovery procedure and to start immediately the conditional handover procedure on the basis of the handover configuration information;
- the handover configuration information may define, as a conditional handover preference processing, in case a beam failure is determined as the radio link or physical layer issue, to start a beam failure recovery procedure and simultaneously to start the conditional handover procedure on the basis of the handover configuration information, and in case the beam failure recovery procedure results in a successful connection of the communication element or function to the communication network, to stop the conditional handover procedure, and in case the conditional handover procedure is successful before the beam failure recovery procedure, to complete the conditional handover procedure and to skip the beam failure recovery procedure;
- the handover configuration information may define, as a conditional handover preference processing, to check whether a connection quality measure related to a communication connection to a candidate network area for the conditional handover procedure is equal to or better than a predetermined threshold, and in case the connection quality measure related to the communication connection to the candidate network area for the conditional handover procedure is equal to or better than the
predetermined threshold, to start the conditional handover procedure on the basis of the handover configuration information;
- in case the connection quality measure related to the communication connection to more than one candidate network area is equal to or better than the predetermined threshold, a candidate network area having the highest connection quality may be selected for the conditional handover procedure;
- the handover configuration information may define, as a conditional handover preference processing, to check whether at least one beam to the first network area is present which provides a connection quality measure for a communication connection to the first network area being equal to or better than a predetermined threshold, and in case there is no beam to the first network area providing a connection quality measure for a communication connection to the first network area being equal to or better than the predetermined threshold, to start the conditional handover procedure on the basis of the handover configuration information;
- the handover configuration information may define, as a conditional handover preference processing, in case a radio link failure is determined as the radio link or physical layer issue, to skip a radio resource control reestablishment procedure and to start immediately the conditional handover procedure on the basis of the handover configuration information;
- the handover configuration information may define, as a conditional handover preference processing, in case a radio link failure is determined as the radio link or physical layer issue, to start a radio resource control reestablishment procedure and simultaneously to start the conditional handover procedure on the basis of the handover configuration information, and in case the radio resource control reestablishment procedure results in a successful connection of the communication element or function to the communication network, to stop the conditional handover procedure, and in case the conditional handover procedure is successful before the radio resource control reestablishment procedure, to complete the conditional handover procedure and to skip the radio resource control reestablishment procedure;
- the handover configuration information may define, as a conditional handover preference processing, to check whether a connection quality measure related to a communication connection to a candidate network area for the conditional handover procedure is equal to or better than a predetermined threshold, and in case the connection quality measure related to the communication connection to the candidate network area for the conditional handover procedure is equal to or better than the predetermined threshold, to start the conditional handover procedure on the basis of the handover configuration information;
- in case the connection quality measure related to the communication connection to more than one candidate network area is equal to or better than the predetermined threshold, a candidate network area having the highest connection quality may be selected for the conditional handover procedure;
- the handover configuration information may define, as a conditional handover preference processing, in case a physical layer problem is determined as the radio link or physical layer issue, to start a preset timer, to check whether a connection quality measure related to a communication connection to a candidate network area for the conditional handover procedure is equal to or better than a predetermined threshold, and in case the timer is expired and the connection quality measure related to the communication connection to the candidate network area for the conditional handover procedure is equal to or better than the predetermined threshold, to start the conditional handover procedure on the basis of the handover configuration information, and in case the timer is expired and the connection quality measure related to the communication connection to the candidate network area for the conditional handover procedure is lower than the predetermined threshold, to skip the conditional handover procedure;
- the handover configuration information may define, as a conditional handover preference processing, in case a physical layer problem is determined as the radio link or physical layer issue, to start a preset timer, to compare a connection quality measure related to a communication connection to a candidate network area for the conditional handover procedure and a connection quality measure related to a communication connection to the first network area, in case the timer is expired and the connection quality measure related to the communication connection to the candidate network area for the conditional handover procedure is better by a predetermined value than the connection quality measure related to a communication connection to the first network area, to start the conditional handover procedure on the basis of the handover configuration information;
- the handover configuration information may define, as a conditional handover preference processing, in case a physical layer problem is determined as the radio link or physical layer issue, to check whether a default timer related to a physical problem detection is started, and in case the default timer is started, to start the conditional handover procedure on the basis of the handover configuration information;
- the handover configuration information may define, as a conditional handover preference processing, in case a preset number of consecutive physical layer issue indications defining an insufficient connection quality is detected, to start the conditional handover procedure on the basis of the handover configuration information;
- the handover configuration information may define, as a conditional handover preference processing, to check whether at least one of a measure for a throughput and a modulation and coding scheme used by a link adaption for scheduling is lower than a predetermined threshold being related to requirements of a backhaul connection, and in case the measure for a throughput is lower than a predetermined threshold or the modulation and coding scheme used by a link adaption for scheduling is lower than a predetermined threshold for a predetermined period of time, to start the conditional handover procedure on the basis of the handover configuration information;
- the handover configuration information may define parameters as thresholds to be used for the conditional handover preference processing, wherein the parameters comprise at least one of fixed or preconfigured values to be used in the conditional handover preference processing and values being calculated as an average of obtained values over a predetermined period of time;
- the handover configuration information may comprise a first set of thresholds to be used in a normal handover procedure when no presence of the radio link or physical layer issue for the communication connection to the first network area is detected, and a second set of thresholds to be used in the conditional handover preference processing when the presence of the radio link or physical layer issue for the communication connection to the first network area is detected;
- the communication element or function may be an integrated access backhaul node, wherein the conditional handover procedure is to be executed for a mobile terminal part of the integrated access backhaul node toward a distributed unit of a next hop integrated access backhaul node or a donor node;
- the communication element or function may be a terminal device or user equipment communicating in the communication network.

Furthermore, according to an example of an embodiment, there is provided, for example, an apparatus for use by a communication element or function communicating in a first network area of a communication network, the first network area being controlled by first communication network control element or function, the apparatus comprising at least one processing circuitry, and at least one memory for storing instructions to be executed by the processing circuitry, wherein the at least one memory and the instructions are configured to, with the at least one processing circuitry, cause the apparatus at least: to conduct a processing for a conditional handover procedure of the communication element or function served by the first communication network control element or function, to receive and process, in the processing for the conditional handover procedure, handover configuration information defining how the conditional handover procedure is to be executed at the communication element or function, wherein the handover configuration information includes instructions for the communication element or function to determine whether a radio link or physical layer issue is present, and in case the presence of the radio link or physical layer issue for the communication connection to the first network area is determined, to conduct a conditional handover preference processing in which an execution of a conditional handover of the communication element or function to another network area is prioritized in comparison to other measures for keeping the communication element or function in connection with the communication network.

Furthermore, according to an example of an embodiment, there is provided, for example, a method for use in a communication element or function communicating in a first network area of a communication network, the first network area being controlled by first communication network control element or function, the method comprising conducting a processing for a conditional handover procedure of the communication element or function served by the first communication network control element or function, receiving and processing, in the processing for the conditional handover procedure, handover configuration information defining how the conditional handover procedure is to be executed at the communication element or function, wherein the handover configuration information includes instructions for the communication element or function to determine whether a radio link or physical layer issue is present, and in case the presence of the radio link or physical layer issue for the communication connection to the first network area is determined, to conduct a conditional handover preference processing in which an execution of a conditional handover of the communication element or function to another network area is prioritized in comparison to other measures for keeping the communication element or function in connection with the communication network.

According to further refinements, these examples may include one or more of the following features:
- the handover configuration information may be received in a handover instruction signaling from the first communication connection control element or function, providing a list of at least one candidate target network area for the conditional handover procedure to the communication element of function, or the handover configuration information may be received in a separate signaling independent from the handover instruction signaling;
- in case a beam failure is determined as the radio link or physical layer issue, a beam failure recovery procedure may be skipped and the conditional handover procedure may be immediately started in the conditional handover preference processing based on the handover configuration information;
- in case a beam failure is determined as the radio link or physical layer issue, a beam failure recovery procedure may be started and simultaneously the conditional handover procedure may be started on the basis of the handover configuration information in the conditional handover preference processing based on the handover configuration information, and in case the beam failure recovery procedure results in a successful connection of the communication element or function to the communication network, the conditional handover procedure may be stopped, and in case the conditional handover procedure is successful before the beam failure recovery procedure, the conditional handover procedure may be completed and the beam failure recovery procedure may be skipped;
- it may be checked whether a connection quality measure related to a communication connection to a candidate network area for the conditional handover procedure is equal to or better than a predetermined threshold, and in case the connection quality measure related to the communication connection to the candidate network area for the conditional handover procedure is equal to or better than the predetermined threshold, the conditional handover procedure may be started on the basis of the handover configuration information;
- in case the connection quality measure related to the communication connection to more than one candidate network area is equal to or better than the predetermined threshold, a candidate network area having the highest connection quality may be selected for the conditional handover procedure;
- it may be checked whether at least one beam to the first network area is present which provides a connection quality measure for a communication connection to the first network area being equal to or better than a predetermined threshold, and in case there is no beam to the first network area providing a connection quality measure for a communication connection to the first network area being equal to or better than the predetermined threshold, the conditional handover procedure may be started on the basis of the handover configuration information;
- in case a radio link failure is determined as the radio link or physical layer issue, a radio resource control reestablishment procedure may be skipped the conditional handover procedure may be immediately started on the basis of the handover configuration information in the conditional handover preference processing based on the handover configuration information;
- a radio resource control reestablishment procedure may be started and simultaneously the conditional handover procedure may be started on the basis of the handover configuration information in the conditional handover preference processing based on the handover configuration information, in case the radio resource control reestablishment procedure results in a successful connection of the communication element or function to the communication network, the conditional handover procedure may be stopped, and in case the conditional handover procedure is successful before the radio resource control reestablishment procedure, the conditional handover procedure may be completed and the radio resource control reestablishment procedure may be skipped;
- it may be checked whether a connection quality measure related to a communication connection to a candidate network area for the conditional handover procedure is equal to or better than a predetermined threshold, and in case the connection quality measure related to the communication connection to the candidate network area for the conditional handover procedure is equal to or better than the predetermined threshold, the conditional handover procedure may be started on the basis of the handover configuration information;
- in case the connection quality measure related to the communication connection to more than one candidate network area is equal to or better than the predetermined threshold, a candidate network area having the highest connection quality may be selected for the conditional handover procedure;
- in case a physical layer problem is determined as the radio link or physical layer issue, in the conditional handover preference processing based on the handover configuration information, a preset timer may be started, it may be checked whether a connection quality measure related to a communication connection to a candidate network area for the conditional handover procedure is equal to or better than a predetermined threshold, and in case the timer is expired and the connection quality measure related to the communication connection to the candidate network area for the conditional handover procedure is equal to or better than the predetermined threshold, the conditional handover procedure may be started on the basis of the handover configuration information, and in case the timer is expired and the connection quality measure related to the communication connection to the candidate network area for the conditional handover procedure is lower than the predetermined threshold, the conditional handover procedure may be skipped;
- in case a physical layer problem is determined as the radio link or physical layer issue, in the conditional handover preference processing based on the handover configuration information, a preset timer may be started, a connection quality measure related to a communication connection to a candidate network area for the conditional handover procedure and a connection quality measure related to a communication connection to the first network area may be compared, in case the timer is expired and the connection quality measure related to the communication connection to the candidate network area for the conditional handover procedure is better by a predetermined value than the connection quality measure related to a communication connection to the first network area, the conditional handover procedure may be started on the basis of the handover configuration information;
- in case a physical layer problem is determined as the radio link or physical layer issue, in the conditional handover preference processing based on the handover configuration information, it may be checked whether a default timer related to a physical problem detection is started, and in case the default timer is started, the conditional handover procedure may be started on the basis of the handover configuration information;
- in case a preset number of consecutive physical layer issue indications defining an insufficient connection quality is detected, in the conditional handover preference processing based on the handover configuration information, the conditional handover procedure may be started on the basis of the handover configuration information;
- in the conditional handover preference processing based on the handover configuration information, is may be checked whether at least one of a measure for a throughput and a modulation and coding scheme used by a link adaption for scheduling is lower than a predetermined threshold being related to requirements of a backhaul connection, and in case the measure for a throughput is lower than a predetermined threshold or the modulation and coding scheme used by a link adaption for scheduling is lower than a predetermined threshold for a predetermined period of time, the conditional handover procedure may be started on the basis of the handover configuration information;
- the handover configuration information may define parameters as thresholds to be used for the conditional handover preference processing, wherein the parameters comprise at least one of fixed or preconfigured values to be used in the conditional handover preference processing and values being calculated as an average of obtained values over a predetermined period of time;
- in the handover configuration information, a first set of thresholds to be used in a normal handover procedure when no presence of the radio link or physical layer issue for the communication connection to the first network area is detected, and a second set of thresholds to be used in the conditional handover preference processing when the presence of the radio link or physical layer issue for the communication connection to the first network area is detected may be received and processed;
- the communication element or function may be an integrated access backhaul node, wherein the conditional handover procedure is to be executed for a mobile terminal part of the integrated access backhaul node toward a distributed unit of a next hop integrated access backhaul node or a donor node;
- the communication element or function may be a terminal device or user equipment communicating in the communication network.

Furthermore, according to an example of an embodiment, there is provided, for example, an apparatus for use by a second communication network control element or function configured to control a communication connection of at least one communication element or function in a second network area of a communication network, the apparatus comprising at least one processing circuitry, and at least one memory for storing instructions to be executed by the processing circuitry, wherein the at least one memory and the instructions are configured to, with the at least one processing circuitry, cause the apparatus at least: to conduct a processing for supporting a conditional handover procedure of a communication element or function served by a first communication network control element or function configured to control a first communication area, to forward, in the processing for the conditional handover procedure, handover configuration information defining how the conditional handover procedure is to be executed at the communication element or function, wherein the handover configuration information includes instructions for the communication element or function to determine whether a radio link or physical layer issue is present, and in case the presence of the radio link or physical layer issue for the communication connection to the first network area is determined, to conduct a conditional handover preference processing in which an execution of a conditional handover of the communication element or function to another network area is prioritized in comparison to other measures for keeping the communication element or function in connection with the communication network.

Furthermore, according to an example of an embodiment, there is provided, for example, a method for use in a second communication network control element or function configured to control a communication connection of at least one communication element orfunction in a second network area of a communication network, the method comprising conducting a processing for supporting a conditional handover procedure of a communication element or function served by a first communication network control element or function configured to control a first communication area, forwarding, in the processing for the conditional handover procedure, handover configuration information defining how the conditional handover procedure is to be executed at the communication element orfunction, wherein the handover configuration information includes instructions for the communication element or function to determine whether a radio link or physical layer issue is present, and in case the presence of the radio link or physical layer issue for the communication connection to the first network area is determined, to conduct a conditional handover preference processing in which an execution of a conditional handover of the communication element or function to another network area is prioritized in comparison to other measures for keeping the communication element or function in connection with the communication network.

In addition, according to embodiments, there is provided, for example, a computer program product for a computer, including software code portions for performing the steps of the above defined methods, when said product is run on the computer. The computer program product may include a computer-readable medium on which said software code portions are stored. Furthermore, the computer program product may be directly loadable into the internal memory of the computer and/or transmittable via a network by means of at least one of upload, download and push procedures.

### BRIEF DESCRIPTION OF THE DRAWINGS

Some embodiments of the present invention are described below, by way of example only, with reference to the accompanying drawings, in which:
Fig. 1 shows a diagram illustrating an example of a communication network in which examples of embodiments are applicable;
Fig. 2 shows a signaling diagram illustrating an example of a conditional handover procedure for illustrating examples of embodiments;
Fig. 3 shows diagram illustrating an example of an architecture of IAB nodes in which examples of embodiments are applicable;
Fig.4 shows a diagram illustrating details of an architecture of IAB nodes in which examples of embodiments are applicable;
Fig. 5 shows a flow chart of a processing executed by a communication network control element or function of a source cell according to some examples of embodiments;
Fig. 6 shows a flow chart of a processing executed by a communication element or function according to some examples of embodiments;
Fig. 7 shows a diagram of a network element or function acting as a communication network control element or function of a source cell according to some examples of embodiments; and
Fig. 8 shows a diagram of a network element or function acting as a communication element or function according to some examples of embodiments.

### DESCRIPTION OF EMBODIMENTS

In the last years, an increasing extension of communication networks, e.g. of wire based communication networks, such as the Integrated Services Digital Network (ISDN), DSL, or wireless communication networks, such as the cdma2000 (code division multiple access) system, cellular 3^{rd} generation (3G) like the Universal Mobile Telecommunications System (UMTS), fourth generation (4G) communication networks or enhanced communication networks based e.g. on LTE or LTE-A, fifth generation (5G) communication networks, cellular 2^{nd} generation (2G) communication networks like the Global System for Mobile communications (GSM), the General Packet Radio System (GPRS), the Enhanced Data Rates for Global Evolution (EDGE), or other wireless communication system, such as the Wireless Local Area Network (WLAN), Bluetooth or Worldwide Interoperability for Microwave Access (WiMAX), took place all over the world. Various organizations, such as the European Telecommunications Standards Institute (ETSI), the 3^{rd} Generation Partnership Project (3GPP), Telecoms & Internet converged Services & Protocols for Advanced Networks (TISPAN), the International Telecommunication Union (ITU), 3^{rd} Generation Partnership Project 2 (3GPP2), Internet Engineering Task Force (IETF), the IEEE (Institute of Electrical and Electronics Engineers), the WiMAX Forum and the like are working on standards or specifications for telecommunication network and access environments.

Basically, for properly establishing and handling a communication between two or more end points (e.g. communication stations or elements, such as terminal devices, user equipments (UEs), or other communication network elements, a database, a server, host etc.), one or more network elements or functions (e.g. virtualized network functions), such as communication network control elements or functions, for example access network elements like access points, radio base stations, relay stations, eNBs, gNBs etc., and core network elements or functions, for example control nodes, support nodes, service nodes, gateways, user plane functions, access and mobility functions etc., may be involved, which may belong to one communication network system or different communication network systems.

One approach to switch a communication connection of a communication element or function, such as a UE, which is connected to the communication network via a wireless connection technique like a radio link or the like, is referred to as conditional handover (CHO). CHO is useful for reducing a number of radio link failures (RLFs) during a switch of the connection by means of a handover to another network area or cell of the communication element of function, compared to baseline handover mechanisms. Such failures may be due to a UE missing a HO command or failing to successfully send a measurement report leading to a HO decision in the serving or the source cell, or the UE failing to access a target cell. CHO allows that the communication element or function, like the UE, receives HO command at a suitable time, i.e. some time earlier when the connection quality in the serving or source cell is good enough, and to access the target cell at another time, i.e. as soon as the condition specified in the HO command is met (however not necessarily immediately after receiving HO command as in normal HO procedure), so that the risk of failures (RLF or handover failure) during the HO can be reduced.

For this, in a CHO processing, in contrast to a normal HO procedure, the final decision about when to switch to a target cell (i.e. the communication connection to the corresponding communication network control element or function, such as a gNB) is made by the UE based on a condition which is pre-configured by the network, e.g. by the source or target cell gNB. Since the pre-configuration is provided when UE still experiences stable connection with its serving cell, it is possible to avoid a situation where UE's measurement report does not reach source gNB or the HO command does not reach the UE, because of already deteriorated radio conditions.

In the following, different exemplifying embodiments will be described using, as an example of a communication network to which examples of embodiments may be applied, a communication network architecture based on 3GPP standards for a communication network, such as a 5G network, without restricting the embodiments to such architectures, however. It is obvious for a person skilled in the art that the embodiments may also be applied to other kinds of communication networks having suitable means by adjusting parameters and procedures appropriately, e.g. LTE or LTE-A, Wi-Fi, worldwide interoperability for microwave access (WiMAX), Bluetooth^{®}, personal communications services (PCS), ZigBee^{®}, wideband code division multiple access (WCDMA), systems using ultra-wideband (UWB) technology, mobile ad-hoc networks (MANETs), wired access, etc.. Furthermore, without loss of generality, the description of some examples of embodiments is related to a mobile communication network, but principles of the invention can be extended and applied to any other type of communication network, such as a wired communication network.

The following examples and embodiments are to be understood only as illustrative examples. Although the specification may refer to "an", "one", or "some" example(s) or embodiment(s) in several locations, this does not necessarily mean that each such reference is related to the same example(s) or embodiment(s), or that the feature only applies to a single example or embodiment. Single features of different embodiments may also be combined to provide other embodiments. Furthermore, terms like "comprising" and "including" should be understood as not limiting the described embodiments to consist of only those features that have been mentioned; such examples and embodiments may also contain features, structures, units, modules etc. that have not been specifically mentioned.

A basic system architecture of a (tele)communication network including a mobile communication system where some examples of embodiments are applicable may include an architecture of one or more communication networks including wireless access network subsystem(s) and core network(s). Such an architecture may include one or more communication network control elements or functions, access network elements, radio access network elements, access service network gateways or base transceiver stations, such as a base station (BS), an access point (AP), a NodeB (NB), an eNB or a gNB, a distributed or a centralized unit, which controls a respective coverage area or cell(s) and with which one or more communication stations such as communication elements, user devices or terminal devices, like a UE, or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or application capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The general functions and interconnections of the described elements and functions, which also depend on the actual network type, are known to those skilled in the art and described in corresponding specifications, so that a detailed description thereof is omitted herein. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of embodiments may also be able to communicate with other networks, such as a public switched telephone network or the Internet. The communication network may also be able to support the usage of cloud services for virtual network elements or functions thereof, wherein it is to be noted that the virtual network part of the telecommunication network can also be provided by non-cloud resources, e.g. an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g., a cloud infrastructure.

Furthermore, a network element, such as communication elements, like a UE, a terminal device, control elements or functions, such as access network elements, like a base station (BS), an gNB, a radio network controller, a core network control element or function, such as a gateway element, or other network elements or functions, as described herein, and any other elements, functions or applications may be implemented by software, e.g. by a computer program product for a computer, and/or by hardware. For executing their respective processing, correspondingly used devices, nodes, functions or network elements may include several means, modules, units, components, etc. (not shown) which are required for control, processing and/or communication/signaling functionality. Such means, modules, units and components may include, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means, radio interface means including e.g. an antenna unit or the like, means for forming a radio communication part etc.) and the like, wherein respective means forming an interface, such as a radio communication part, can be also located on a remote site (e.g. a radio head or a radio station etc.). It is to be noted that in the present specification processing portions should not be only considered to represent physical portions of one or more processors, but may also be considered as a logical division of the referred processing tasks performed by one or more processors.

It should be appreciated that according to some examples, a so-called "liquid" or flexible network concept may be employed where the operations and functionalities of a network element, a network function, or of another entity of the network, may be performed in different entities or functions, such as in a node, host or server, in a flexible manner. In other words, a "division of labor" between involved network elements, functions or entities may vary case by case.

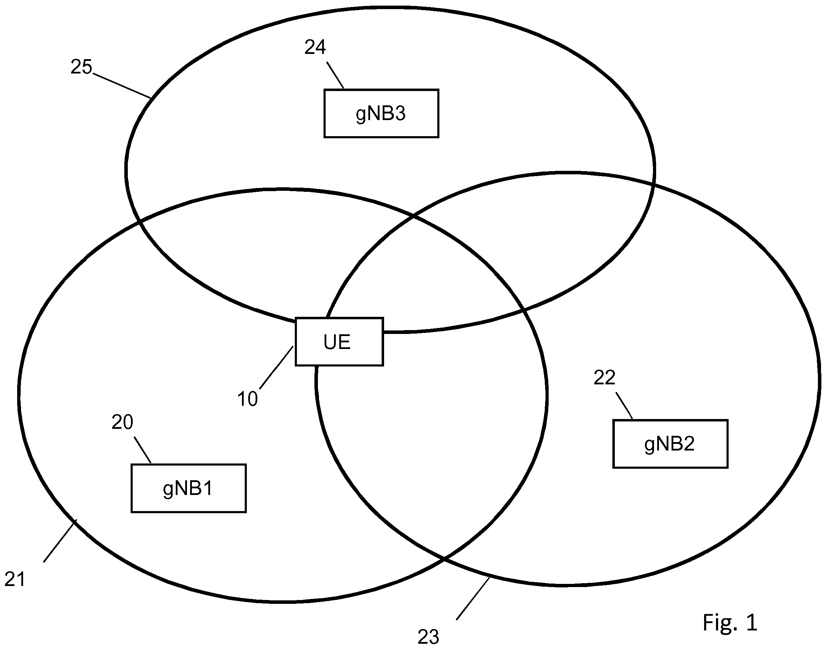

Fig. 1 shows a diagram illustrating an example of a communication network in which examples of embodiments are applicable. Specifically, Fig. 1 shows a configuration in which a communication element or function 10, such as a mobile terminal or a UE or another device or entity being connectable to a communication network via a wireless communication connection is connected and served by a first network area or cell 21 controlled by a corresponding communication network control element or function 20, such as a gNB (gNB1). It is to be noted that the network area in which the UE 10 is located and which serves the UE 10 can be of different types, such as a macro cell, a pico cell or the like. Neighboring network areas 23 (controlled by a corresponding communication network control element or function 22, such as a gNB (gNB2)) and 25 (controlled by a corresponding communication network control element or function 20, such as a gNB (gNB3)) are also in range for a communication connection with the UE 10 and form thus potential targets for a handover. It is to be noted that the communication network control elements or functions 20, 22 and 24 are connected to a core network (CN) not shown in Fig. 1. Furthermore, even though two neighboring cells 23 and 25 are depicted in Fig. 1, it is possible that less or more neighboring cells for the serving cell 21 are present.

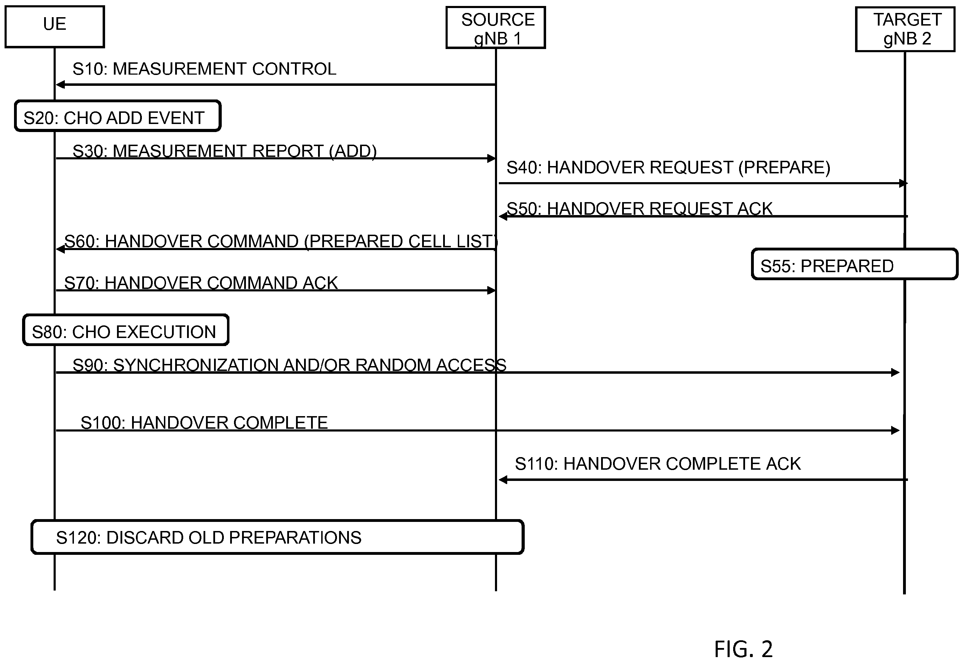

Fig. 2 shows a signaling diagram illustrating an example of a conditional handover procedure for illustrating examples of embodiments. In Fig. 2, it is assumed that the UE 10 is served by the cell 21 of gNB1 20, which forms the source cell for a handover procedure, and that cell 23 of gNB2 22 is measureable by UE 10 for determining a connection quality thereof, i.e. which forms a potential target cell for a handover. As a matter of course, more than one potential target cell can be present which are measurable by the UE 10. It is to be noted that the processing described in connection with Fig. 2 illustrates only one example for a conditional handover procedure, wherein examples of embodiments are also applicable to other types of conditional handover procedures.

First, in a CHO preparation phase, in which the UE 10 and the target cell are prepared for conducting the conditional handover, in S10, the source cell, i.e. the serving gNB1 20, sends to the UE 10 a measurement control indication in order to instruct the UE 10 to conduct connection quality measurements of neighboring cells for finding a candidate handover target and to report the measurement results to the serving gNB1 20.

In response to the instruction in S10, the UE 10 conducts measurements of communication connections qualities of neighboring cells (e.g. cells 23 or 25 in Fig. 1). In S20, CHO candidate target cell addition event's criteria are met, and UE 10 provides the serving cell gNB1 20 with information on the possible target cell (in Fig. 2, only cell 23 of gNB 22 is assumed to be measured) by sending a measurement report in S30.

The serving cell gNB1 20 determines the candidate target cell 23 of gNB2 22 and sends a request for HO preparation to the target cell gNB2 22 indicated in measurement report in S40. It is to be noted that the information provided in the measurement report can also result in a cancellation of a cell from a candidate target cell list.

In S50, the target cell sends to the serving cell a response regarding the HO preparation, e.g. in the form of a HO request acknowledgement. Furthermore, the target cell gNB2 22 holds the UE related information for being prepared for a (potential) handover of the UE (S55). According to some examples of embodiments, it is also possible that the target cell gNB2 22 provides also the UE configuration to be used in the target cell in case the HO is executed.

In S60, the serving cell gNB1 20 sends CHO-dedicated event configuration (CHO configuration information) and target cell access information as well as the UE configuration to be used to the UE by means of a handover command for preparing the CHO on the UE side. This is done, for example, by means of an RRC connection reconfiguration message with mobility control information. In S70, the UE 10 responds to the serving cell gNB1 20 with a handover command acknowledgement.

Now, the CHO preparation phase is completed. That is, the UE 10 still communicates with the serving (source) cell. Then, after some time, a CHO event is detected by the UE, e.g. a signal level of a neighboring cell configured for CHO becomes offset better than the signal level of the serving cell, which causes the execution of the CHO in S80.

In S90, the UE 10 directly synchronizes to the target cell gNB2 22 (indicated in the prepared cell list received in S60). Furthermore, a random access (RACH) operation is executed; alternatively a RACH-less HO operation is also possible in which case the random access operation is not required. In this situation, any further measurement report is not sent to the serving cell.

Then, as soon as the UE 10 obtains access to the target cell gNB2 22, it sends in S100 a HO complete message to the target cell gNB2 22.

The target cell gNB2 22 informs the source cell (i.e. gNB1 20) about handover completion in S110. In S120, the former serving cell gNB1 20 discards all previous preparations for the UE 10. That is, after the successful connection to the target cells, data transmission is resumed between the target cell and UE.

It is to be noted that the CHO configuration information, which define, for example, one or more events causing a CHO, such as a loss of connection quality or the like, can be preset or provided by the network, e.g. from the serving cell gNB1 20. For example, the configuration information is provided in a signaling from the serving cell gNB1 20 in S10 or S60, or in a separate signaling. Alternatively, it is also possible that at least part of the CHO configuration information is provided by a target cell gNB (e.g. gNB2 22), wherein the information is then forwarded via the serving cell gNB1 20, e.g. in connection with S60.

At the moment, CHO is designed with an eye to support access of UEs wherein it is in particular useful for UEs moving fast through the network. However, there are also other situations where the handover is required not due to mobility reasons but due to other reasons. For example, in so-called IAB deployments (described later), the main reason for changing a parent node of an IAB node would be due to link failure or its significant deterioration (e.g. since blockage occurs or the like). Other examples concern, for example, stationary UEs employed in IoT scenarios, like vending machines or the like, where a handover is not caused due to mobility reasons. Furthermore, CHO uses the same triggering conditions as the ones used for measurement report triggering for traditional handover (e.g. neighboring cell becomes configured offset better than serving cell or neighboring cell becomes better than a configured threshold), which require Layer 3 filtered measurements to be available. Layer 3 filtering of the measurements introduces some delay, which may be unacceptable for the so called URLLC (Ultra Reliable Low Latency Communications) services. Thus, traditionally used HO triggers based on mobility events may not be optimal in such scenarios.

Consequently, according to examples of embodiments, it is considered in which way triggers for CHO can be adapted to such scenarios. In conditional HO, similarly as in traditional HO case, the handover preparation is triggered based on the measurement reports sent by the UEs when a configured reporting event's criteria are met. However, it works under the assumption that a certain UE is moving through the network. It also requires that measurements are filtered with layer 3 (L3) filter, which slows down the procedure. This is an intended effect for traditional mobility, but in case of the scenarios described above, e.g. when a fixed IAB node is concerned, where the reason for handover is e.g. blockage, this will increase service interruption time while not bringing any benefit.

Hence, according to examples of embodiments of the invention, it is defined in the CHO configuration that a UE, when deciding to conduct the CHO procedure, to determine whether the reason for the trigger is based on a radio link or physical layer issue. In case this is confirmed, a CHO preference processing is to be conducted by the UE which concerns a processing allowing at least to accelerate the start of the CHO procedure or to replace any other (default) measure to be conducted in case of loss of connection quality to the serving cell which causes the handover to be executed. Examples for the radio link or physical layer issue causing the CHO preference processing to be executed include, for example, a beam failure (BF), a radio link failure (RLF) or a PHY layer problem.

Conventionally, in case of RLF or BF, a default processing is for example to try first to maintain the connection to the current serving cell. This is reasonable under conditions where the UE is moving in the cell, for example, since the loss of the connection to the (current) serving cell may be only temporarily, and when the reason is not present anymore, the previous (and still sufficient) connection quality may be present again.

For determining a radio link failure, for example, a so-called radio link monitoring is employed. Here, the downlink radio link quality of the serving cell is monitored by a UE for the purpose of indicating out-of-sync (OOS) / in-sync (IS) status to higher layers. The physical layer in the UE indicates, in frames where the radio link quality is assessed, out-of-sync to higher layers when the radio link quality is worse than a threshold (e.g. Qout) for all resources in the set of resources for radio link monitoring. When the radio link quality is better than the threshold Qin for any resource in the set of resources for radio link monitoring, the physical layer in the UE indicates, in frames where the radio link quality is assessed, in-sync to higher layers. Basically, the UE is configured by the network with at least one or more reference signals (e.g. CSI-RS or SSB), which is monitored/measured for the purpose of indicating OOS and IS indications/status to higher layers.

RLF is determined by the UE, for example, when one of the following criteria are met:
- expiry of a timer started after indication of radio problems from the physical layer (if radio problems are recovered before the timer is expired, the UE stops the timer);
- random access procedure failure;
- RLC failure.

That is, the RRC layer counts indications from physical layer. In case a configured number of OOS indications is provided from lower layers, a timer (e.g. T310 timer) is executed. If it expires, RLF is declared.

After RLF is determined, usually, the UE stays in RRC_CONNECTED mode, selects a suitable cell and then initiates an RRC re-establishment procedure. It enters RRC_IDLE mode if a suitable cell wasn't found within a certain time after RLF was declared.

On the other hand, beam failure occurs when the network is no longer able to reach the UE with a control channel due to incorrect adjustment of the beams. The UE detects this situation, for example, by estimating the quality of a hypothetical PDCCH reception transmitted over a beam the network would use to reach the UE. In detail, the physical layer in the UE provides an indication to higher layers when the radio link quality for all corresponding resource configurations in the set that the UE uses to assess the radio link quality is worse than a threshold (e.g. Qout). The physical layer informs the higher layers when the radio link quality is worse than the threshold with a periodicity. That is, beam failure detection is also performed on a set of reference signals, which may be the same, similar or different reference signals as used for radio link monitoring.

That is, for beam failure detection, MAC counts beam failure instances indication from lower layers and when it reaches a configured number, beam failure recovery (BFR) is triggered.

Once the UE has declared beam failure, conventionally, it tries to reconnect to the network. To do this, the UE needs to identify a new candidate beam, by performing measurements on a beam identification RS. Candidate beams can be identified, for example, before declaring beam failure. The UE uses the beam identification RS to identify a new downlink beam. The UE also uses the beam identification RS to derive the parameters of a beam recovery signal described, e.g. to find the time instances when a beam recovery signal should be transmitted. In the BF, the UE triggers random access procedure, wherein beam recovery requests contains candidate beam info for connection reestablishment.

However, these default procedures conducted in case of radio link failure, beam failure and physical layer issues (which occurs, for example, when a blockage in the radio link happens) require additional time which lengthens a service interruption.

Therefore, according to examples of embodiments, in order to avoid a delay in the connectivity recovery or in a CHO procedure, when the trigger event is caused by any of radio link, beam failure and physical layer issues, a modified CHO processing is executed which is referred to also as CHO preference processing.

In the following, settings for the CHO preference processing, which are indicated to the UE in connection with CHO configuration information, for example, and the operation caused thereby are described.

According to examples of embodiments, when as the radio link, beam failure and physical layer issues, a beam failure is detected by the UE 10, the UE 10 does not trigger the BFR procedure, but instead it performs a handover to one of the prepared cells (provided earlier with handover command for CHO, for example). That is, the modified CHO processing (i.e. the CHO preference processing) is to skip the default processing in case of BF (i.e. the BFR processing) and to directly execute the CHO. This is advantageous, for example, for fixed UEs or IAB nodes where it is probable that in case a beam is lost, there are no more operable beams within a certain cell (i.e. the serving cell).

According to further examples of embodiments, in the CHO preference processing, an additional threshold (e.g. based on RSRP, SINR, RSRQ) is configured, which the target cell needs to meet in order for the UE to abandon the BFR procedure and to perform the CHO procedure instead. Furthermore, according to some examples of embodiments, among all the prepared cells indicated in the target cell candidate list, UE should select the cell according to the criteria configured by the network, for example the cell providing the highest connection quality level or the highest signal level is preset as the target cell to be selected (e.g. based on a L3 measurements model). Alternatively, the selection of the target cell can be made by the UE itself.

According to some further examples of embodiments, an additional condition can be provided that it is to be checked whether there are any candidate beams in the serving cell which are above a defined threshold. For example, an operation used in the default BFR procedure can be employed. Only if there are no corresponding beams, the CHO is started.

Alternatively, according to some examples of embodiments, instead of skipping the BFR, both CHO and BFR are triggered by the UE at the same time, e.g. by sending an additional indication to upper layers (e.g. RRC). In case the BFR is successfully completed before the CHO is finalized, a corresponding indication is sent to upper layers wherein the CHO procedure is stopped (e.g. RRC decides to abandon the CHO procedure). Otherwise, in case the CHO procedure is ready before the BFR is successfully finalized, the handover is executed.

It is to be noted that in this alternative case where BFR and CHO are started simultaneously also the above described options concerning the threshold (based e.g. on RSRP, SINR, RSRQ) which the target cell needs to meet in order for the UE to abandon the BFR procedure and to perform the CHO procedure instead (including the selection options for the target cell), and the check whether there are any candidate beams in the serving cell which are above a defined threshold are applicable.

On the other hand, when as the radio link, beam failure and physical layer issues, a radio link failure is detected by the UE 10 (e.g. after unsuccessful BFR procedure), the UE 10 does not trigger a reestablishment procedure, such as a RRC connection reestablishment procedure, but immediately executes the CHO. That is, the modified CHO processing (i.e. the CHO preference processing) is to skip the default processing in case of RLF (i.e. the RRC connection reestablishment procedure) and to directly execute the CHO.

Similar to the above described case of BF, in case of the RLF, according to further examples of embodiments, in the CHO preference processing, an additional threshold (e.g. based on RSRP, SINR, RSRQ) is configured, which the target cell needs to meet in order for the UE to abandon the RRC connection reestablishment procedure and to perform the CHO procedure instead. Furthermore, according to some examples of embodiments, among all the prepared cells indicated in the target cell candidate list, the UE is configured to select the cell according to criteria configured by the network, for example the cell providing the highest connection quality level or the highest signal level is preset as the target cell to be selected (e.g. based on a L3 measurements model). Alternatively, the selection of the target cell can be made by the UE itself.

Alternatively, according to some examples of embodiments, instead of skipping the RRC connection reestablishment procedure, both CHO and RRC connection reestablishment procedure are triggered by the UE at the same time, e.g. by sending an additional indication to upper layers (e.g. RRC). In case the RRC connection reestablishment procedure is successfully completed before the CHO is finalized, a corresponding indication is sent to upper layers wherein the CHO procedure is stopped. Otherwise, in case the CHO procedure is ready before the RRC connection reestablishment procedure is successfully finalized, the handover is executed.

Moreover, according to some examples of embodiments, a new timer is introduced. The new time is, for example, shorter than a timer configured for RLF and/or BFR procedures, and is provided within the CHO configuration information, for example. Moreover, the UE is also configured with a threshold, such as the additional threshold described above (e.g. based on RSRP, SINR, RSRQ), which the target cell needs to meet. The new timer is started together with a default timer used when a PHY layer problem is detected, e.g. the T310. After the expiry of the new timer, the UE 10 checks whether any of the candidate target cells listed within CHO configuration information is above the configured threshold. In case at least one cell is above the threshold, the CHO is executed. Otherwise, the UE does nothing, wherein as a result RLF may be declared, followed by a normal RRC connection re-establishment procedure, for example.

Alternatively, according to some examples of embodiments, after the expiry of the new timer, the UE checks whether any of the candidate target cells listed within the CHO configuration information provides a connection quality measurement which is above the last measured connection quality of the serving cell. For example, in case thresholds for triggering the CHO are conservatively set, the UE is able to execute the CHO to a cell which provides a better connection quality or signal level (e.g. at least X dB higher) than the last measurement of the serving cell that started experiencing some signal degradation that may lead to a RLF.

Furthermore, according to further examples of embodiments, in case a default timer (such as the T310) is started, the UE triggers the CHO. As indicated above, the timer T310 starts when the UE detects a PHY layer related problem e.g. when it receives corresponding indications from lower layers. That is, the modified CHO processing (i.e. the CHO preference processing) is to conduct the CHO when an indication regarding PHY layers is detected.

Furthermore, according to further examples of embodiments, once a predetermined number of consecutive physical layer issue indications, such as Qout, is detected or computed (e.g. the first Qout, the first two Qout or N consecutive Qout, wherein N is configurable by the network, for example), the UE executes the CHO. According to some examples of embodiments, the UE can compare, for example, a signal level in the serving cell with a threshold and sends an indication to upper layers. In case a predetermined number of indications is received, the upper layer decides that CHO is to be executed.

In addition, according to further examples of embodiments, a threshold for the throughput or MCS that the link adaptation ends up using for scheduling is defined. In case the actual throughput does not satisfy the requirements of the BH connection, for example when MCS or throughput is too low over a predetermined period of time, the execution of the CHO is triggered by the UE. For example, according to some examples of embodiments, a corresponding throughput threshold is relative to a long(er) term average, e.g. if the instantaneous throughput is X% lower than the long term average, wherein the value for X can be fixed or configurable. On the other hand, according to some examples of embodiments, the scheduled MCS may trigger the CHO in case it is lower than a given value for a configured time period.

It is to be noted that according to examples of embodiments, parameters such as thresholds to be used for the CHO preference processing or the "normal" CHO processing can be fixed or preconfigured values which are provided by the network, for example. Alternatively or additionally, parameters such as thresholds to be used for the CHO preference processing or the "normal" CHO processing can be determined e.g. on the UE side, e.g. by calculating an average for values or measurements being obtained over a predetermined period of time.

It is to be noted that according to some examples of embodiments, the parameters discussed above, which are used for the CHO preference processing, are provided as part of the CHO configuration information. For example, corresponding information is provided as a separate trigger for the CHO execution. Alternatively, the parameters are part of the CHO configuration based on traditional measurement events.

In this case, for example, the configuration information can comprise separate cell quality thresholds, which are based on the radio link situation of the UE. Specifically, in case no radio link, beam failure or physical layer issues are detected, a first set of parameters which are related to traditional CHO triggers (defining e.g. more conservative thresholds setting) are used. On the other hand, in case of radio link, beam failure or physical layer issues, as discussed above, i.e. for the CHO preference processing, a second set of CHO triggers and threshold setting are used.

Specifically, for example, in case there is no radio link or beam failure problem, the UE only executes the CHO on the basis of an A3 event (i.e. connection quality of the neighboring cell is better by a preset offset than the serving cell for a certain time). It is to be noted, for example, that in this case, as a further alternative, there can be two sets of A3 events configuration, i.e. 'normal'/legacy A3, used for normal HO, and 'CHO specific' A3, where parameters can be different, e.g. more aggressively or more conservatively configured.

On the other hand, in case there is detected a radio link failure or beam failure problem or physical layer issue, the UE executes the CHO under the conditions of the above described CHO preference processing, i.e. without waiting to evaluate serving cell quality on L3 level e.g. in case the target cell quality is above the configured threshold and/or there are no beams above a certain quality threshold

According to examples of embodiments, the conditional handover can be executed as soon as a radio link issue or the like is detected. This allows for shorter interruption times compared to a procedure using traditional mobility events.

It is to be noted that in the above discussed examples of embodiments, the CHO configuration information and in particular the parameters and thresholds for the CHO preference processing are provided to the UE from the serving cell communication network control element or function. According to some further examples of embodiments, at least a part of the respective parameters and thresholds can be provided by the target cell communication network control element or function, wherein the information is forwarded by the serving cell communication network control element or function.

As indicated above, one possible application of the above described CHO preference processing is in an IAB scenario. IAB is under development for new communication network types, such as 5G networks, for providing an integrated access and backhaul, i.e. relay operation. The idea behind IAB is to utilize available radio resources to provide backhaul links for the traffic received from UEs by gNB or a DU of a gNB, i.e. wireless resources are split between access and backhaul links so as to dynamically change the partition between access and backhaul links and meet instantaneous demands of UEs across the network. That is, IAB allows a flexible and very dense deployment of NR cells without densifying the fixed transport network proportionately. Deployment scenarios are e.g. outdoor small cell deployments, indoors, or even mobile relays (e.g. on buses or trains).

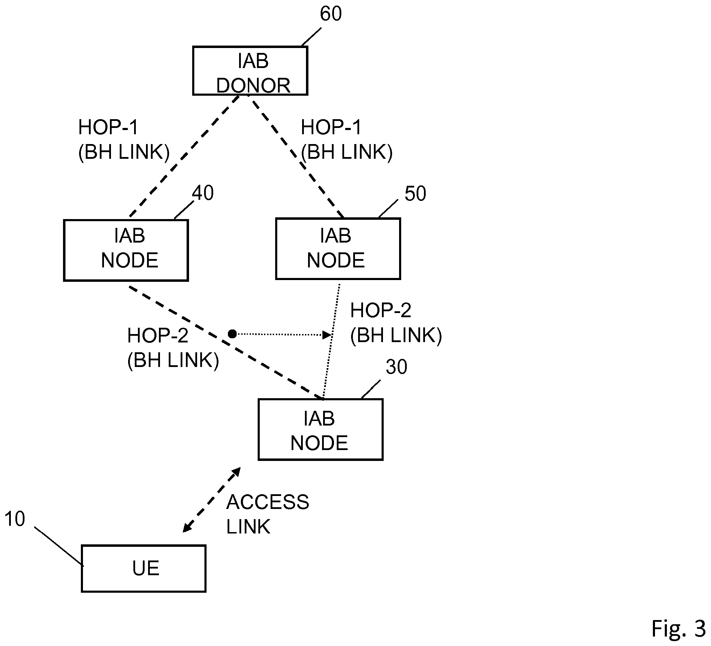

Fig. 3 shows diagram illustrating an example of an architecture of IAB nodes in which examples of embodiments are applicable.

IAB nodes usually operate in a defined topology, which usually resembles a tree topology. As shown in Fig. 3, three IAB nodes 30, 40 and 50 are provided. Furthermore, a so-called IAB donor node 60 is provided. The UE 10 is connected, for example, to IAB node 30. Basically, IAB nodes are ordered such that they have a specified parent node (the one they are connected to at the moment) and a set of candidate parent nodes, i.e. the ones they can switch to in case of, e.g. blockage or current parent node failure. In Fig. 3, the IAB node 30 has as a parent node IAB node 40 (connected via HOP-2 forming a BH link) which in turn is connected to the IAB donor node 60 as its parent node (connected via HOP-1 forming a BH link). Moreover, IAB node 50 is connected to the IAB donor node 60 as its parent node (connected via HOP-1 forming a BH link). IAB node 50 is the candidate for a connection switch of IAB node 30, i.e. for a handover of the HOP-2 connection for the backhaul link.

IAB strives to reuse existing functions and interfaces defined for access. In particular, mobile termination (MT), gNB-DU, gNB-CU, and the like, as well as corresponding interfaces (such as NR Uu (between MT and gNB), F1 (between CU and DU), NG (between CU and CN), etc. are used as baseline for the IAB architectures.

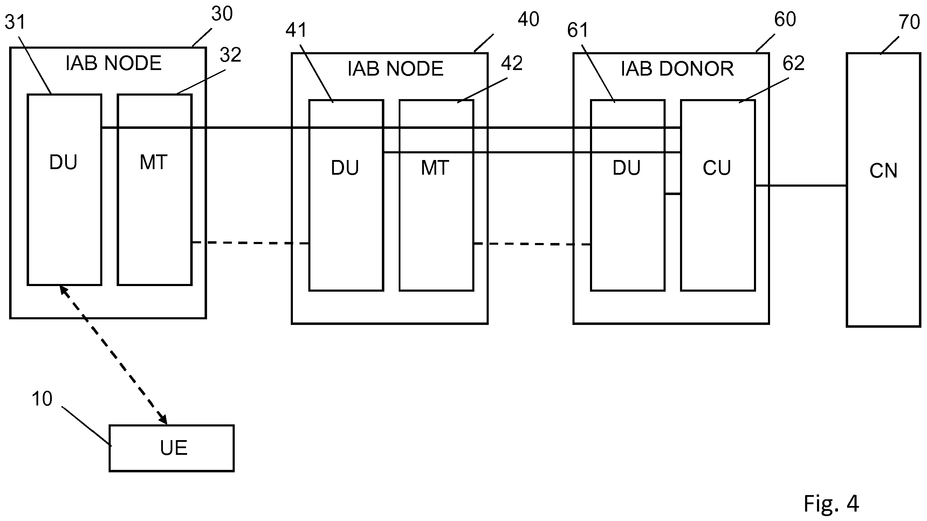

Fig.4 shows a diagram illustrating details of an architecture of IAB nodes in which examples of embodiments are applicable. It is to be noted that the architecture shown in Fig. 4 represents only one of a plurality of possible configurations for the IAB node architecture and is presented for illustrative purposes showing how examples of embodiments are applicable to IAB nodes. It is evident that principles of examples of embodiments are also applicable to other architecture types.

As shown in Fig. 4, which is based on the structure shown in Fig. 3, a CU/DU-split architecture is depicted for a two-hop chain of the IAB-nodes 30, 40 underneath the IAB donor node 60. The lAB node 30 comprises a DU part 31 and an MT part 32, the IAB node 40 comprises a DU part 41 and an MT part 42, and the IAB donor node 60 comprises a DU part 61 and a CU part 62. Via the MT part, the IAB node connects to an upstream IAB node or the IAB donor node. Via the DU, the IAB node establishes RLC channels to the UE and to the MTs of downstream IAB-nodes. The IAB donor node 60 holds a DU to support UEs and MTs of downstream IAB nodes. The IAB donor node holds a CU part for the DUs of all IAB nodes and for its own DU. Each DU on an IAB-node connects to the CU in the IAB-donor using a logical interface like F1 or the like. That is, the DU parts 31, 41 and 61 are connected to the CU part 62 by logical interfaces indicated by solid lines while the MT part 32 is connected via a wireless link to the DU part 41 of the parent IAB node 40 (dashed line), wherein similarly the MT part 42 is connected via a wireless link to the DU part 61 of the parent IAB donor node 60 (dashed line). The data belonging to the logical interfaces represented by solid lines is carried over wireless links represented by the dashed lines.

That is, IAB nodes comprise different functions depending on the architecture option which is used wherein one part of IAB nodes is the MT function which is comparable with the UE described above in connection with the CHO processing. That is, the MT part of the IAB node connects, like a UE, to a part comparable to a gNB or a DU part of a gNB (i.e. the DU part of the parent node (i.e. a node one hop closer to the IAB donor node, or to the IAB donor node itself. Like the gNB described in the previous examples, the DU part of an IAB node serves the UEs 10 connected to this IAB node and UE/MT parts of its IAB child nodes.

When assuming that IAB nodes are fixed elements, handovers/topology adaptation basically happens due to changes in radio conditions rather than due to mobility reasons. As such, the CHO processing described above is applicable in particular for the IAB architecture described above. Specifically, in IAB scenarios, the network normally beforehand knows which candidate cells for the CHO can be used, wherein changes of these candidate cells are rare and can be determined easily (e.g. by corresponding notification when a new deployment is installed).

Due to their configuration, IAB nodes providing wireless backhaul links are vulnerable to blockage, e.g. due to moving objects such as vehicles, due to seasonal changes (foliage), or due to infrastructure changes (new buildings). Furthermore, traffic variations can create uneven load distribution on wireless backhaul links leading to local link or node congestion.

Hence, the above described examples of embodiments regarding the CHO preference processing are particularly applicable for IAB scenarios. Since in the IAB deployments the main reason for changing a parent node of an IAB node is due to link failure or its significant deterioration (e.g. since mmWave is likely to be used, blockage is an event that can happen), the CHO preference processing allows to avoid service interruptions. Thus, according to examples of embodiments, the conditional handover can be executed as soon as a radio link issue or the like is detected. This allows for shorter interruption times compared to a procedure using traditional mobility events. In the IAB scenario, minimizing service interruption times is of high importance since it affects all the UEs served by the IAB node and UEs served by subtending IAB nodes.

Specifically, CHO in IAB cases does not require that measurements are filtered with an L3 filter or the like, which slows down the procedure, since in case of fixed IAB nodes, which are subject to blockage, this increases the service interruption time while not bringing any benefit.

For example, referring again to Fig. 3, the service interruption is caused by the switch from IAB node 40 to IAB node 50, wherein the interruption is to be minimized. For this purpose, the CHO preference processing is used.

It is to be noted that the CHO configuration information for the IAB nodes can be hard-coded so that the MT/UE part of the IAB node is aware to conduct the CHO preference processing in case of a radio link or beam failure issue for the MT part. Furthermore, an indication from higher layers is used to configure the IAB node for the CHO preference processing. Alternatively, the CHO configuration information can be provided by RRC signaling as for normal UEs.

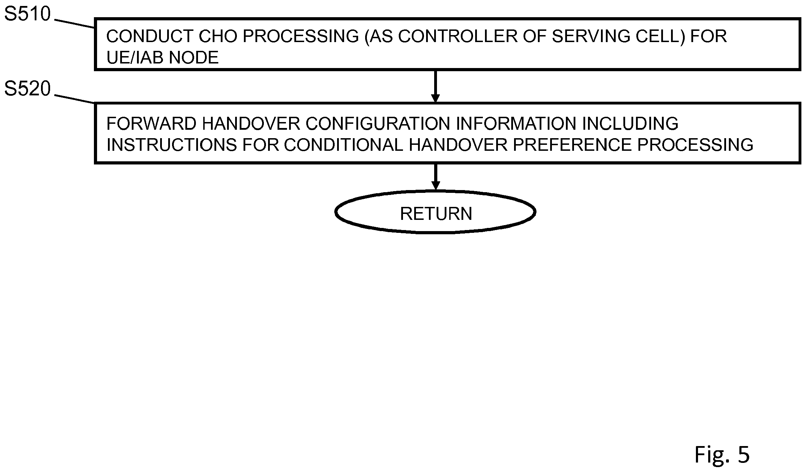

Fig. 5 shows a flow chart of a processing executed by a communication network control element or function of a serving or source cell (such as gNB1 20) which controls a communication connection of a communication element or function (e.g. the UE 10). As described above the communication element or function can be an IAB node, wherein a conditional handover procedure is executed for a MT part of the IAB node toward a DU of a next hop (i.e. parent) IAB node or a IAB donor node, or the communication element orfunction can be a terminal device or UE communicating in the communication network.

In S510, a processing for a CHO procedure of the communication element or function served by the first communication network control element or function is conducted (see e.g. Fig. 2).

In S520, in the processing for the CHO procedure, handover configuration information defining how the CHO procedure is to be executed at the communication element or function is forwarded. The handover configuration information includes instructions for the communication element orfunction to determine whether a radio link or physical layer issue is present, and in case the presence of the radio link or physical layer issue for the communication connection to the first network area is determined, to conduct a CHO preference processing in which an execution of a conditional handover of the communication element orfunction to another network area is prioritized (i.e. accelerated or immediately conducted), in comparison to other measures for keeping the communication element or function in connection with the communication network.

According to examples of embodiments, the handover configuration information is forwarded in a handover instruction signaling providing a list of at least one candidate target network area for the CHO procedure to the communication element of function. Alternatively, according to examples of embodiments, the handover configuration information is forwarded in a separate signaling independent from the handover instruction signaling.

According to examples of embodiments, the handover configuration information defines, as a CHO preference processing, in case a beam failure is determined as the radio link or physical layer issue, to skip a BFR procedure and to start immediately the CHO procedure on the basis of the handover configuration information.

According to further examples of embodiments, the handover configuration information defines, as a CHO preference processing, in case a beam failure is determined as the radio link or physical layer issue, to start a BFR procedure and simultaneously to start the CHO procedure on the basis of the handover configuration information. In case the BFR procedure results in a successful connection of the communication element or function to the communication network, the CHO procedure is to be stopped. On the other hand, in case the CHO procedure is successful before the BFR procedure, the CHO procedure is to be completed and the BFR procedure is to be skipped.

According to examples of embodiments handover, the handover configuration information further defines, as a CHO preference processing, to check whether a connection quality measure related to a communication connection to a candidate network area for the conditional handover procedure is equal to or better than a predetermined threshold (e.g. RSRP, RSRQ, SINR). In case the connection quality measure related to the communication connection to the candidate network area for the conditional handover procedure is equal to or better than the predetermined threshold, the CHO procedure is to be started on the basis of the handover configuration information.

According to examples of embodiments, in case the connection quality measure related to the communication connection to more than one candidate network area is equal to or better than the predetermined threshold, a candidate network area having the highest connection quality is to be selected for the conditional handover procedure.

In addition, according to examples of embodiments, the handover configuration information further defines, as a CHO preference processing, to check whether at least one beam to the first network area is present which provides a connection quality measure for a communication connection to the first network area being equal to or better than a predetermined threshold. In case there is no beam to the first network area providing a connection quality measure for a communication connection to the first network area being equal to or better than the predetermined threshold, the CHO procedure is to be started on the basis of the handover configuration information.

Moreover, according to examples of embodiments, the handover configuration information defines, as a CHO preference processing, in case a radio link failure is determined as the radio link or physical layer issue, to skip a reestablishment procedure and to start immediately the CHO procedure on the basis of the handover configuration information.

Alternatively, according to examples of embodiments, the handover configuration information defines, as a CHO preference processing, in case a radio link failure is determined as the radio link or physical layer issue, to start a reestablishment procedure and simultaneously to start the CHO procedure on the basis of the handover configuration information. In case the reestablishment procedure results in a successful connection of the communication element or function to the communication network, the CHO procedure is to be stopped. Otherwise, in case the CHO procedure is successful before the reestablishment procedure, the CHO procedure is to be completed and the reestablishment procedure is to be skipped.

Moreover, according to examples of embodiments, the handover configuration information further defines, as a CHO preference processing, to check whether a connection quality measure related to a communication connection to a candidate network area for the conditional handover procedure is equal to or better than a predetermined threshold. In case the connection quality measure related to the communication connection to the candidate network area for the conditional handover procedure is equal to or better than the predetermined threshold, the CHO procedure is to be started on the basis of the handover configuration information.

According to examples of embodiments, in case the connection quality measure related to the communication connection to more than one candidate network area is equal to or better than the predetermined threshold, a candidate network area having the highest connection quality is to be selected for the CHO procedure.

Furthermore, according to examples of embodiments, the handover configuration information defines, as a CHO preference processing, in case a physical layer problem is determined as the radio link or physical layer issue, to start a preset timer (new timer discussed above), and to check whether a connection quality measure related to a communication connection to a candidate network area for the CHO procedure is equal to or better than a predetermined threshold (e.g. RSRP, RSRQ, SINR). In case the timer is expired and the connection quality measure related to the communication connection to the candidate network area for the CHO procedure is equal to or better than the predetermined threshold, the CHO procedure is to be started on the basis of the handover configuration information. On the other hand, in case the timer is expired and the connection quality measure related to the communication connection to the candidate network area for the conditional handover procedure is lower than the predetermined threshold, the CHO procedure is to be skipped.

Moreover, according to examples of embodiments, the handover configuration information defines, as a CHO preference processing, in case a physical layer problem is determined as the radio link or physical layer issue, to start a preset timer (i.e. the new timer defined above) and to compare a connection quality measure related to a communication connection to a candidate network area for the CHO procedure and a connection quality measure related to a communication connection to the first network area. In case the timer is expired and the connection quality measure related to the communication connection to the candidate network area for the conditional handover procedure is better by a predetermined value (e.g. by X db) than the connection quality measure related to a communication connection to the first network area, the CHO procedure is to be started on the basis of the handover configuration information.

Moreover, according to examples of embodiments, the handover configuration information defines, as a CHO preference processing, in case a physical layer problem is determined as the radio link or physical layer issue, to check whether a default timer related to a physical problem detection (e.g. T310) is started. In case the default timer is started, the CHO procedure is to be started on the basis of the handover configuration information.

In addition, according to examples of embodiments, the handover configuration information defines, as a CHO preference processing, in case a preset or configured number of consecutive physical layer issue indications (e.g. Qout) defining an insufficient connection quality is detected, to start the CHO procedure on the basis of the handover configuration information.

Furthermore, according to examples of embodiments, the handover configuration information defines, as a CHO preference processing, to check whether at least one of a measure for a throughput and a MCS used by a link adaption for scheduling is lower than a predetermined threshold being related to requirements of a backhaul connection. In case the measure for a throughput is lower than a predetermined threshold, or the MCS used by a link adaption for scheduling is lower than a predetermined threshold for a predetermined period of time, the CHO procedure is to be started on the basis of the handover configuration information.

In addition, according to examples of embodiments, the handover configuration information defines parameters as thresholds to be used for the CHO preference processing, wherein the parameters comprise at least one of fixed or preconfigured values to be used in the CHO preference processing and values being calculated as an average of obtained values over a predetermined period of time.

Moreover, according to examples of embodiments, the handover configuration information comprises a first set of thresholds to be used in a normal handover procedure when no presence of the radio link or physical layer issue for the communication connection to the first network area is detected, and a second set of thresholds to be used in the CHO preference processing when the presence of the radio link or physical layer issue for the communication connection to the first network area is detected.

It is to be noted that a similar processing to that described above can executed by a communication network control element or function of a target cell (such as gNB2 22) which can control a communication connection of a communication element or function (e.g. the UE 10). As described above the communication element or function can be an IAB node, wherein a conditional handover procedure is executed for a MT part of the IAB node toward a DU of a next hop (i.e. parent) IAB node or a IAB donor node, or the communication element orfunction can be a terminal device or UE communicating in the communication network. That is, a processing for supporting a conditional handover procedure of a communication element or function served by a first communication network control element or function configured to control a first communication area (i.e. gNB1 20) is conducted. In the processing for the CHO procedure, handover configuration information defining how the CHO procedure is to be executed at the communication element or function is forwarded, wherein the handover configuration information includes instructions for the communication element or function to determine whether a radio link or physical layer issue is present, and in case the presence of the radio link or physical layer issue for the communication connection to the first network area is determined, to conduct a CHO preference processing in which an execution of a conditional handover of the communication element or function to another network area is prioritized in comparison to other measures for keeping the communication element or function in connection with the communication network.

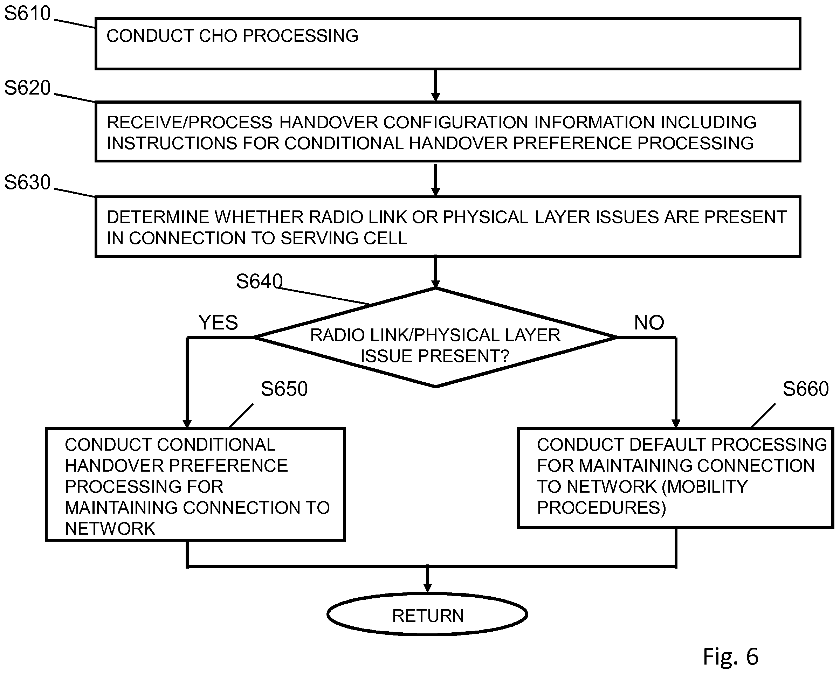

Fig. 6 shows a flow chart of a processing executed by a communication element or function (such as UE 10) communicating in a first network area or cell controlled by a first communication network control element orfunction (e.g. the gNB1 20). As described above, the communication element or function can be an IAB node, wherein a CHO procedure is executed for a MT part of the IAB node toward a DU of a next hop (i.e. parent) IAB node or a IAB donor node, or the communication element or function can be a terminal device or UE communicating in the communication network

In S610, according to examples of embodiments, a processing for a CHO procedure of the communication element orfunction served by the first communication network control element or function is conducted (see e.g. Fig. 2).

Then, in S620, in the processing for the CHO procedure, handover configuration information defining how the CHO procedure is to be executed at the communication element or function is received and processed, wherein handover configuration information includes instructions for the communication element or function.

According to examples of embodiments, the handover configuration information is received in a handover instruction signaling from the first communication connection control element or function, providing a list of at least one candidate target network area for the CHO procedure to the communication element or function. Alternatively, the handover configuration information is received in a separate signaling independent from the handover instruction signaling.

In S630, it is determined whether a radio link or physical layer issue is present (e.g. by the measures defined above with regard to the radio link monitoring and the like).

In case in S640 the presence of the radio link or physical layer issue for the communication connection to the first network area is determined (YES in S640), the process proceeds to S650 in which a CHO preference processing is conducted in which an execution of a CHO of the communication element or function to another network area is prioritized in comparison to other measures for keeping the communication element or function in connection with the communication network.

For example, according to examples of embodiments, in case a beam failure is determined as the radio link or physical layer issue, a beam BFR procedure is skipped and the CHO procedure is immediately started in the CHO preference processing based on the handover configuration information.

Otherwise, in case a beam failure is determined as the radio link or physical layer issue, according to examples of embodiments, a BFR procedure and simultaneously the CHO procedure on the basis of the handover configuration information are started in the CHO preference processing based on the handover configuration information. In case the BFR procedure results in a successful connection of the communication element or function to the communication network, the CHO procedure is stopped. Otherwise, in case the CHO procedure is successful before the BFR procedure, the CHO procedure is completed and the BFR procedure is skipped.

Moreover, according to examples of embodiments, it is checked whether a connection quality measure related to a communication connection to a candidate network area for the conditional handover procedure is equal to or better than a predetermined threshold (e.g. RSRP, RSRQ, SINR). In case the connection quality measure related to the communication connection to the candidate network area for the conditional handover procedure is equal to or better than the predetermined threshold, the CHO procedure is started on the basis of the handover configuration information.

Furthermore, according to examples of embodiments, in case the connection quality measure related to the communication connection to more than one candidate network area is equal to or better than the predetermined threshold, a candidate network area having the highest connection quality for the CHO procedure is selected.

In addition, according to examples of embodiments, it is checked whether at least one beam to the first network area is present which provides a connection quality measure for a communication connection to the first network area being equal to or better than a predetermined threshold. In case there is no beam to the first network area providing a connection quality measure for a communication connection to the first network area being equal to or better than the predetermined threshold, the CHO procedure on the basis of the handover configuration information.

Moreover, in case a radio link failure is determined as the radio link or physical layer issue, a (RRC) reestablishment procedure is skipped and the CHO procedure is immediately started on the basis of the handover configuration information in the CHO preference processing based on the handover configuration information.

Furthermore, according to examples of embodiments, a (RRC) reestablishment procedure and the CHO on the basis of the handover configuration information are simultaneously started in the CHO preference processing based on the handover configuration information. In case the reestablishment procedure results in a successful connection of the communication element or function to the communication network, the CHO procedure is stopped. Otherwise, in case the CHO procedure is successful before the reestablishment procedure, the CHO procedure is completed and the reestablishment procedure is skipped.

According to examples of embodiments, it is checked whether a connection quality measure related to a communication connection to a candidate network area for the conditional handover procedure is equal to or better than a predetermined threshold. In case the connection quality measure related to the communication connection to the candidate network area for the CHO procedure is equal to or better than the predetermined threshold, the CHO procedure is started on the basis of the handover configuration information.

According to examples of embodiments, in case the connection quality measure related to the communication connection to more than one candidate network area is equal to or better than the predetermined threshold, a candidate network area having the highest connection quality is selected for the CHO procedure.

Moreover, according to examples of embodiments, in case a physical layer problem is determined as the radio link or physical layer issue, in the CHO preference processing based on the handover configuration information, a preset timer (i.e. the new timer described above) is started. Then, it is checked whether a connection quality measure related to a communication connection to a candidate network area for the CHO procedure is equal to or better than a predetermined threshold (e.g. RSRP, RSRQ, SINR). In case the timer is expired and the connection quality measure related to the communication connection to the candidate network area for the conditional handover procedure is equal to or better than the predetermined threshold, the conditional CHO procedure is started on the basis of the handover configuration information. Otherwise, in case the timer is expired and the connection quality measure related to the communication connection to the candidate network area for the CHO procedure is lower than the predetermined threshold, the CHO procedure is skipped.

According to examples of embodiments, in case a physical layer problem is determined as the radio link or physical layer issue, in the CHO preference processing based on the handover configuration information, a preset timer (e.g. the new timer described above) is started. Then, a connection quality measure related to a communication connection to a candidate network area for the CHO procedure and a connection quality measure related to a communication connection to the first network area are compared. In case the timer is expired and the connection quality measure related to the communication connection to the candidate network area for the CHO procedure is better by a predetermined value (e.g. by X db) than the connection quality measure related to a communication connection to the first network area, the CHO procedure is started on the basis of the handover configuration information.

Furthermore, according to examples of embodiments, in case a physical layer problem is determined as the radio link or physical layer issue, in the CHO preference processing based on the handover configuration information, it is checked whether a default timer (e.g. T310) related to a physical problem detection is started. In case the default timer is started, the CHO procedure is started on the basis of the handover configuration information.

On the other hand, in case a preset or configured number of consecutive physical layer issue indications (e.g. Qout) defining an insufficient connection quality is detected, in the CHO preference processing based on the handover configuration information, the CHO procedure is started on the basis of the handover configuration information.

According to examples of embodiments, it is checked, in the CHO preference processing based on the handover configuration information, whether at least one of a measure for a throughput and a MCS used by a link adaption for scheduling is lower than a predetermined threshold being related to requirements of a backhaul connection. In case the measure for a throughput is lower than a predetermined threshold or the MCS used by a link adaption for scheduling is lower than a predetermined threshold for a predetermined period of time, the CHO procedure is started on the basis of the handover configuration information.

Moreover, according to examples of embodiments, the handover configuration information defines parameters as thresholds to be used for the conditional handover preference processing, wherein the parameters comprise at least one of fixed or preconfigured values to be used in the conditional handover preference processing and values being calculated as an average of obtained values over a predetermined period of time.

According to examples of embodiments, in the handover configuration information, a first set of thresholds to be used in a normal handover procedure when no presence of the radio link or physical layer issue for the communication connection to the first network area is detected, and a second set of thresholds to be used in the CHO preference processing when the presence of the radio link or physical layer issue for the communication connection to the first network area is detected are received and processed.

Referring back to Fig. 6, in case in S640 the presence of the radio link or physical layer issue for the communication connection to the first network area is not determined (NO in S640), the processing proceeds to S660 in which a default processing (e.g. procedures based on traditional HO procedures, or a CHO with traditional triggering events). Furthermore, according to some examples of embodiments, also the following (additional) processing is conceivable (not shown in Fig. 6). When the processing in S640 results in "YES", i.e. there is a radio link or physical layer issue for the communication connection, it is checked whether a CHO preference processing for the detected radio link or physical layer issue present or valid. For example, in case the specific type of the detected radio link failure is not covered by the CHO preference processing, or in case the conditions have changed making the CHO preference processing unnecessary (at least for the detected radio link or physical layer issue), or if the CHO preference processing is not to be started due to any other reasons, the processing results in an execution of default measures like BFR, RLF, re-establishment etc.. Otherwise, in case this additional check after an affirmative decision in S640 results in that the CHO preference processing is to be conducted for the detected radio link or physical layer issue, the processing proceeds again to S650.

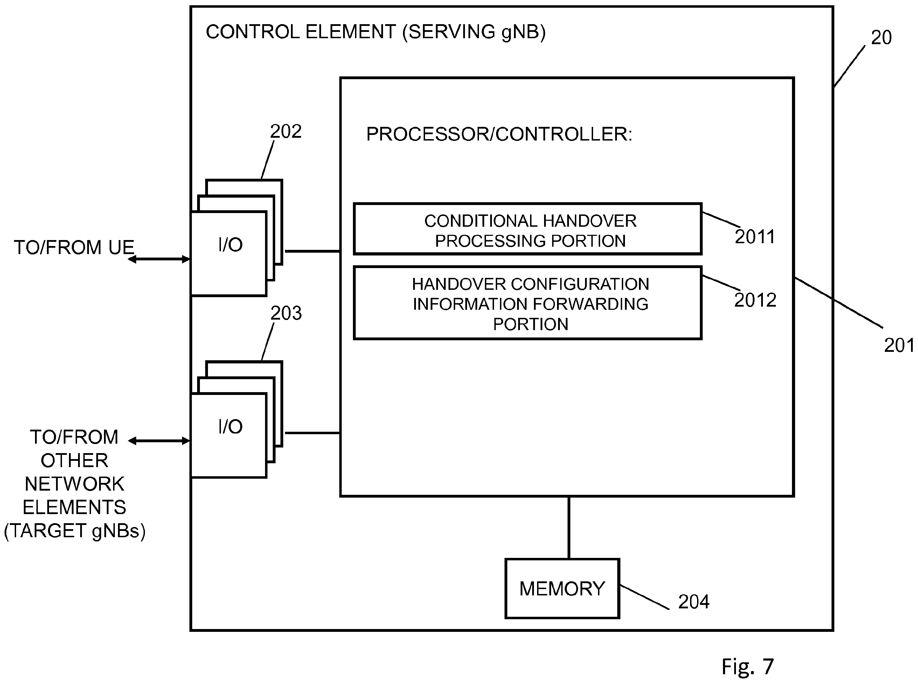

Fig. 7 shows a diagram of a network element or function acting as a communication network control element or function controlling a source cell according to some examples of embodiments, i.e. the gNB1 20 of Fig. 1 or IAB nodes or IAB donor of Fig. 3, which is configured to conduct a communication connection control procedure as described in connection with some of the examples of embodiments. It is to be noted that the communication network control element or function, like the gNB1 20 of Fig. 1, may include further elements or functions besides those described herein below. Furthermore, even though reference is made to a communication network control element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The communication network control element like the gNB1 20 shown in Fig. 7 may include a processing circuitry, a processing function, a control unit or a processor 201, such as a CPU or the like, which is suitable for executing instructions given by programs or the like related to the communication connection control procedure. The processor 201 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference sign 202 and 203 denote input/output (I/O) units or functions (interfaces) connected to the processor or processing function 201. The I/O units 202 may be used for communicating with the communication element or function like the UE 10 or the IAB node 30, as described in connection with Figs. 1 and 3, for example. The I/O units 203 may be used for communicating with the network, like other communication network elements or functions such as the gNB2 22 or IAB nodes, as described in connection with Figs. 1 and 3, for example. The I/O units 202 and 203 may be a combined unit including communication equipment towards several entities, or may include a distributed structure with a plurality of different interfaces for different entities. Reference sign 204 denotes a memory usable, for example, for storing data and programs to be executed by the processor or processing function 201 and/or as a working storage of the processor or processing function 201. It is to be noted that the memory 204 may be implemented by using one or more memory portions of the same or different type of memory.

The processor or processing function 201 is configured to execute processing related to the above described communication connection control processing. In particular, the processor or processing circuitry or function 201 includes one or more of the following sub-portions. Sub-portion 2011 is a processing portion which is usable as a portion for conducting a processing regarding a conditional handover. The portion 2011 may be configured to perform processing according to S510 of Fig. 5. Furthermore, the processor or processing circuitry or function 201 may include a sub-portion 2012 usable as a portion for forwarding handover configuration information. The portion 2012 may be configured to perform a processing according to S520 of Fig. 5.

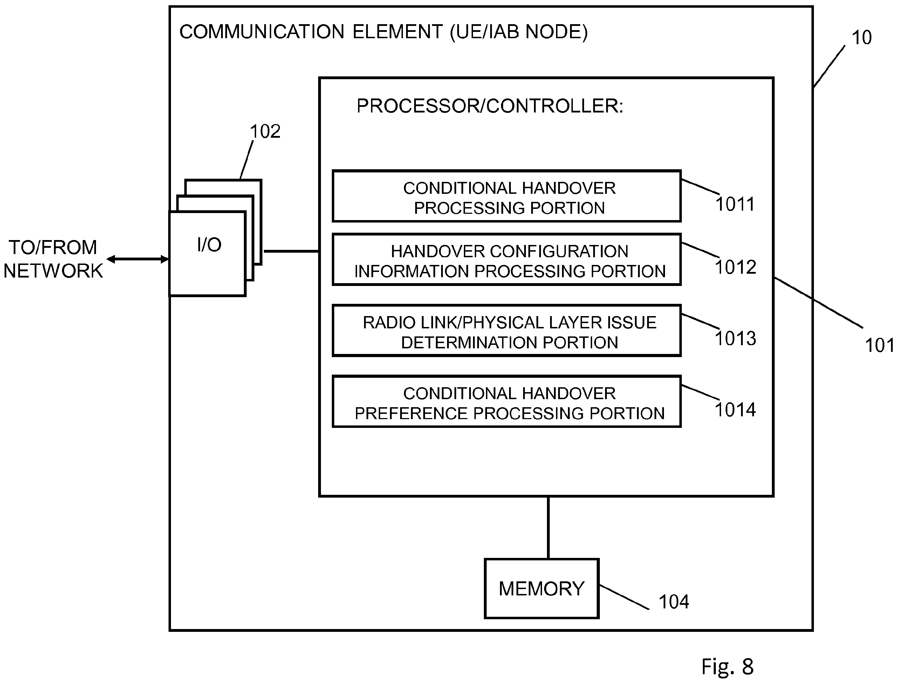

Fig. 8 shows a diagram of a network element or function acting as a communication element or function according to some examples of embodiments, i.e. the UE 10 of Fig. 1 or an IAB node of Fig. 3, which is configured to conduct a communication connection control procedure as described in connection with some of the examples of embodiments. It is to be noted that the communication element or function, like the UE 10 of Fig. 1 or IAB node 30 of Fig. 3, may include further elements or functions besides those described herein below. Furthermore, even though reference is made to a communication element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The communication element like the UE 10 shown in Fig. 8 may include a processing circuitry, a processing function, a control unit or a processor 101, such as a CPU or the like, which is suitable for executing instructions given by programs or the like related to the communication connection control procedure. The processor 101 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference sign 102 denote input/output (I/O) units or functions (interfaces) connected to the processor or processing function 101. The I/O units 102 may be used for communicating with the communication network, like gNBs or the IAB nodes 40, 50, as described in connection with Figs. 1 and 3, for example. The I/O units 102 may be a combined unit including communication equipment towards several entities, or may include a distributed structure with a plurality of different interfaces for different entities. Reference sign 104 denotes a memory usable, for example, for storing data and programs to be executed by the processor or processing function 101 and/or as a working storage of the processor or processing function 101. It is to be noted that the memory 104 may be implemented by using one or more memory portions of the same or different type of memory.

The processor or processing function 101 is configured to execute processing related to the above described communication connection control processing. In particular, the processor or processing circuitry or function 101 includes one or more of the following sub-portions. Sub-portion 1011 is a processing portion which is usable as a portion for conducting a processing regarding a conditional handover. The portion 1011 may be configured to perform processing according to S610 of Fig. 6. Furthermore, the processor or processing circuitry or function 101 may include a sub-portion 1012 usable as a portion for processing handover configuration information. The portion 1012 may be configured to perform a processing according to S620 of Fig. 6. In addition, the processor or processing circuitry orfunction 101 may include a sub-portion 1013 usable as a portion for determining a radio link or physical layer issue. The portion 1013 may be configured to perform a processing according to S630 and S640 of Fig. 6. Furthermore, the processor or processing circuitry or function 101 may include a sub-portion 1014 usable as a portion for conducting a conditional handover preference processing. The portion 1014 may be configured to perform a processing according to S650 of Fig. 6.

It is to be noted that examples of embodiments of the invention are applicable to various different network configurations. In other words, the examples shown in the above described figures, which are used as a basis for the above discussed examples, are only illustrative and do not limit the present invention in any way. That is, additional further existing and proposed new functionalities available in a corresponding operating environment may be used in connection with examples of embodiments of the invention based on the principles defined.

According to a further example of embodiments, there is provided, for example, an apparatus for use by a first communication network control element or function configured to control a communication connection of at least one communication element or function in a first network area of a communication network, the apparatus comprising means for conducting a processing for a conditional handover procedure of the communication element or function served by the first communication network control element orfunction, means for forwarding, in the processing for the conditional handover procedure, handover configuration information defining how the conditional handover procedure is to be executed at the communication element or function, wherein the handover configuration information includes instructions for the communication element or function to determine whether a radio link or physical layer issue is present, and in case the presence of the radio link or physical layer issue for the communication connection to the first network area is determined, to conduct a conditional handover preference processing in which an execution of a conditional handover of the communication element or function to another network area is prioritized in comparison to other measures for keeping the communication element or function in connection with the communication network.

Furthermore, according to some other examples of embodiments, the above defined apparatus may further comprise means for conducting at least one of the processing defined in the above described methods, for example a method according that described in connection with Fig 5.

According to a further example of embodiments, there is provided, for example, an apparatus for use by a communication element or function communicating in a first network area of a communication network, the first network area being controlled by first communication network control element orfunction, the apparatus comprising means for conducting a processing for a conditional handover procedure of the communication element or function served by the first communication network control element or function, means for receiving and processing, in the processing for the conditional handover procedure, handover configuration information defining how the conditional handover procedure is to be executed at the communication element orfunction, wherein the handover configuration information includes instructions for the communication element or function to determine whether a radio link or physical layer issue is present, and in case the presence of the radio link or physical layer issue for the communication connection to the first network area is determined, to conduct a conditional handover preference processing in which an execution of a conditional handover of the communication element or function to another network area is prioritized in comparison to other measures for keeping the communication element or function in connection with the communication network.

Furthermore, according to some other examples of embodiments, the above defined apparatus may further comprise means for conducting at least one of the processing defined in the above described methods, for example a method according that described in connection with Fig 6.

According to a further example of embodiments, there is provided, for example, an apparatus for use by a second communication network control element or function configured to control a communication connection of at least one communication element or function in a second network area of a communication network, the apparatus comprising means for conducting a processing for supporting a conditional handover procedure of a communication element or function served by a first communication network control element or function configured to control a first communication area, means for forwarding, in the processing for the conditional handover procedure, handover configuration information defining how the conditional handover procedure is to be executed at the communication element or function, wherein the handover configuration information includes instructions for the communication element orfunction to determine whether a radio link or physical layer issue is present, and in case the presence of the radio link or physical layer issue for the communication connection to the first network area is determined, to conduct a conditional handover preference processing in which an execution of a conditional handover of the communication element or function to another network area is prioritized in comparison to other measures for keeping the communication element or function in connection with the communication network.

According to a further example of embodiments, there is provided, for example, a non-transitory computer readable medium comprising program instructions for causing an apparatus to perform at least the following: when being use in a first communication network control element or function configured to control a communication connection of at least one communication element or function in a first network area of a communication network, conducting a processing for a conditional handover procedure of the communication element or function served by the first communication network control element or function, forwarding, in the processing for the conditional handover procedure, handover configuration information defining how the conditional handover procedure is to be executed at the communication element or function, wherein the handover configuration information includes instructions for the communication element or function to determine whether a radio link or physical layer issue is present, and in case the presence of the radio link or physical layer issue for the communication connection to the first network area is determined, to conduct a conditional handover preference processing in which an execution of a conditional handover of the communication element or function to another network area is prioritized in comparison to other measures for keeping the communication element or function in connection with the communication network.

According to a further example of embodiments, there is provided, for example, a non-transitory computer readable medium comprising program instructions for causing an apparatus to perform at least the following: when being used in a communication element or function communicating in a first network area of a communication network, the first network area being controlled by first communication network control element or function, conducting a processing for a conditional handover procedure of the communication element or function served by the first communication network control element or function, receiving and processing, in the processing for the conditional handover procedure, handover configuration information defining how the conditional handover procedure is to be executed at the communication element orfunction, wherein the handover configuration information includes instructions for the communication element or function to determine whether a radio link or physical layer issue is present, and in case the presence of the radio link or physical layer issue for the communication connection to the first network area is determined, to conduct a conditional handover preference processing in which an execution of a conditional handover of the communication element or function to another network area is prioritized in comparison to other measures for keeping the communication element or function in connection with the communication network.

According to a further example of embodiments, there is provided, for example, a non-transitory computer readable medium comprising program instructions for causing an apparatus to perform at least the following: when being used a second communication network control element or function configured to control a communication connection of at least one communication element or function in a second network area of a communication network, conducting a processing for supporting a conditional handover procedure of a communication element or function served by a first communication network control element or function configured to control a first communication area, forwarding, in the processing for the conditional handover procedure, handover configuration information defining how the conditional handover procedure is to be executed at the communication element or function, wherein the handover configuration information includes instructions for the communication element or function to determine whether a radio link or physical layer issue is present, and in case the presence of the radio link or physical layer issue for the communication connection to the first network area is determined, to conduct a conditional handover preference processing in which an execution of a conditional handover of the communication element or function to another network area is prioritized in comparison to other measures for keeping the communication element or function in connection with the communication network.

It should be appreciated that
- an access technology via which traffic is transferred to and from an entity in the communication network may be any suitable present or future technology, such as WLAN (Wireless Local Access Network), WiMAX (Worldwide Interoperability for Microwave Access), LTE, LTE-A, 5G, Bluetooth, Infrared, and the like may be used; additionally, embodiments may also apply wired technologies, e.g. IP based access technologies like cable networks or fixed lines.
- embodiments suitable to be implemented as software code or portions of it and being run using a processor or processing function are software code independent and can be specified using any known or future developed programming language, such as a high-level programming language, such as objective-C, C, C++, C#, Java, Python, Javascript, other scripting languages etc., or a low-level programming language, such as a machine language, or an assembler.
- implementation of embodiments is hardware independent and may be implemented using any known or future developed hardware technology or any hybrids of these, such as a microprocessor or CPU (Central Processing Unit), MOS (Metal Oxide Semiconductor), CMOS (Complementary MOS), BiMOS (Bipolar MOS), BiCMOS (Bipolar CMOS), ECL (Emitter Coupled Logic), and/or TTL (Transistor-Transistor Logic).
- embodiments may be implemented as individual devices, apparatuses, units, means or functions, or in a distributed fashion, for example, one or more processors or processing functions may be used or shared in the processing, or one or more processing sections or processing portions may be used and shared in the processing, wherein one physical processor or more than one physical processor may be used for implementing one or more processing portions dedicated to specific processing as described,
- an apparatus may be implemented by a semiconductor chip, a chipset, or a (hardware) module including such chip or chipset;
- embodiments may also be implemented as any combination of hardware and software, such as ASIC (Application Specific IC (Integrated Circuit)) components, FPGA (Field-programmable Gate Arrays) or CPLD (Complex Programmable Logic Device) components or DSP (Digital Signal Processor) components.
- embodiments may also be implemented as computer program products, including a computer usable medium having a computer readable program code embodied therein, the computer readable program code adapted to execute a process as described in embodiments, wherein the computer usable medium may be a non-transitory medium.

Although the present invention has been described herein before with reference to particular embodiments thereof, the present invention is not limited thereto and various modifications can be made thereto as long as they fall within the terms of the appended claims.

## Claims

1. An apparatus for use by a first communication network control element or function configured to control a communication connection of at least one communication element or function in a first network area of a communication network, the apparatus comprising
at least one processing circuitry, and
at least one memory for storing instructions to be executed by the processing circuitry,
wherein the at least one memory and the instructions are configured to, with the at least one processing circuitry, cause the apparatus at least:
to conduct a processing for a conditional handover procedure of the communication element or function served by the first communication network control element or function, to forward, to the communication element or function,
in the processing for the conditional handover procedure, handover configuration information defining how the conditional handover procedure is to be executed at the communication element or function, wherein the handover configuration information includes instructions for the communication element or function, wherein the handover configuration information defines, as a conditional handover preference processing, in case a beam failure is determined as the radio link or physical layer issue,
to skip a beam failure recovery procedure and instead to start immediately the conditional handover procedure on the basis of the handover configuration information,
to determine whether a radio link or physical layer issue is present, and
in case the presence of the radio link or physical layer issue for the communication connection to the first network area is determined, to conduct a conditional handover preference processing in which an execution of a conditional handover of the communication element or function to another network area is prioritized in comparison to other measures for keeping the communication element or function in connection with the communication network.

2. The apparatus according to claim 1, wherein the at least one memory and the instructions are further configured to, with the at least one processing circuitry, cause the apparatus at least:
to forward the handover configuration information in a handover instruction signaling providing a list of at least one candidate target network area for the conditional handover procedure to the communication element of function, or
to forward the handover configuration information in a separate signaling independent from the handover instruction signaling.

3. An apparatus for use by a communication element or function communicating in a first network area of a communication network, the first network area being controlled by first communication network control element or function, the apparatus comprising
at least one processing circuitry, and
at least one memory for storing instructions to be executed by the processing circuitry,
wherein the at least one memory and the instructions are configured to, with the at least one processing circuitry, cause the apparatus at least:
to conduct a processing for a conditional handover procedure of the communication element or function served by the first communication network control element or function,
to receive, from the first communication connection control element or function,
and process, in the processing for the conditional handover procedure, handover configuration information defining how the conditional handover procedure is to be executed at the communication element or function, wherein the handover configuration information includes instructions for the communication element or function, and in case a beam failure is determined as the radio link or physical layer issue, to skip a beam failure recovery procedure and instead to start immediately the conditional handover procedure in the conditional handover preference processing based on the handover configuration information,
to determine whether a radio link or physical layer issue is present, and
in case the presence of the radio link or physical layer issue for the communication connection to the first network area is determined, to conduct a conditional handover preference processing in which an execution of a conditional handover of the communication element or function to another network area is prioritized in comparison to other measures for keeping the communication element or function in connection with the communication network.

4. The apparatus according to claim 3, wherein the at least one memory and the instructions are further configured to, with the at least one processing circuitry, cause the apparatus at least:
to receive the handover configuration information in a handover instruction signaling from the first communication connection control element or function, providing a list of at least one candidate target network area for the conditional handover procedure to the communication element of function, or
to receive the handover configuration information in a separate signaling independent from the handover instruction signaling.

5. A method for use in a first communication network control element or function configured to control a communication connection of at least one communication element or function in a first network area of a communication network, the method comprising
conducting a processing for a conditional handover procedure of the communication element or function served by the first communication network control element or function, forwarding, to the communication element of function,
in the processing for the conditional handover procedure, handover configuration information defining how the conditional handover procedure is to be executed at the communication element or function, wherein the handover configuration information includes instructions for the communication element or function, wherein the handover configuration information defines, as a conditional handover preference processing, in case a beam failure is determined as the radio link or physical layer issue,
to skip a beam failure recovery procedure and instead to start immediately the conditional handover procedure on the basis of the handover configuration information
to determine whether a radio link or physical layer issue is present, and
in case the presence of the radio link or physical layer issue for the communication connection to the first network area is determined, to conduct a conditional handover preference processing in which an execution of a conditional handover of the communication element or function to another network area is prioritized in comparison to other measures for keeping the communication element or function in connection with the communication network.

6. The method according to claim 5, further comprising
forwarding the handover configuration information in a handover instruction signaling providing a list of at least one candidate target network area for the conditional handover procedure to the communication element of function, or
forwarding the handover configuration information in a separate signaling independent from the handover instruction signaling.

7. The method according to claim 5 or 6, wherein the handover configuration information further defines, as a conditional handover preference processing,
to check whether a connection quality measure related to a communication connection to a candidate network area for the conditional handover procedure is equal to or better than a predetermined threshold, and
in case the connection quality measure related to the communication connection to the candidate network area for the conditional handover procedure is equal to or better than the predetermined threshold, to start the conditional handover procedure on the basis of the handover configuration information.

8. The method according to claim 7, wherein in case the connection quality measure related to the communication connection to more than one candidate network area is equal to or better than the predetermined threshold, a candidate network area having the highest connection quality is to be selected for the conditional handover procedure.

9. The method according to claim 5 or 6, wherein the handover configuration information further defines, as a conditional handover preference processing,
to check whether at least one beam to the first network area is present which provides a connection quality measure for a communication connection to the first network area being equal to or better than a predetermined threshold, and
in case there is no beam to the first network area providing a connection quality measure for a communication connection to the first network area being equal to or better than the predetermined threshold, to start the conditional handover procedure on the basis of the handover configuration information.

## Patentansprüche

1. Vorrichtung zur Verwendung durch ein erstes Kommunikationsnetzwerksteuerelement oder eine erste Kommunikationsnetzwerksteuerfunktion, das bzw. die dazu ausgelegt ist, eine Kommunikationsverbindung von mindestens einem Kommunikationselement oder einer Kommunikationsfunktion in einem ersten Netzwerkbereich eines Kommunikationsnetzwerks zu steuern, wobei die Vorrichtung Folgendes umfasst
mindestens eine Verarbeitungsschaltung, und
mindestens einen Speicher zum Speichern von Anweisungen, die von der Verarbeitungsschaltung auszuführen sind,
wobei der mindestens eine Speicher und die Anweisungen dazu ausgelegt sind, die Vorrichtung mit der mindestens einen Verarbeitungsschaltung mindestens zu Folgendem zu veranlassen:
Durchführen einer Verarbeitung für eine bedingte Übergabeprozedur des Kommunikationselements oder der Kommunikationsfunktion, das bzw. die vom ersten Kommunikationsnetzwerksteuerelement oder der ersten Kommunikationsnetzwerksteuerfunktion bedient wird,
Weiterleiten von Übergabeauslegungsinformationen, die definieren, wie die bedingte Übergabeprozedur am Kommunikationselement oder an der Kommunikationsfunktion auszuführen ist, beim Verarbeiten für die bedingte Übergabeprozedur an das Kommunikationselement oder die Kommunikationsfunktion, wobei die Übergabeauslegungsinformationen Anweisungen für das Kommunikationselement oder die Kommunikationsfunktion beinhalten, wobei die Übergabeauslegungsinformationen in dem Fall, in dem ein Strahlfehler als das Problem mit dem Funklink oder der physischen Schicht bestimmt wird, das Überspringen einer Strahlfehlerwiederherstellungsprozedur als eine Präferenzverarbeitung für die bedingte Übergabe und stattdessen das sofortige Starten der bedingten Übergabeprozedur auf Basis der Übergabeauslegungsinformationen definieren,
Bestimmen, ob ein Problem mit dem Funklink oder der physischen Schicht vorhanden ist, und
in dem Fall, in dem das Vorhandensein des Problems mit dem Funklink oder der physischen Schicht für die Kommunikationsverbindung zum ersten Netzwerkbereich bestimmt wird, Durchführen einer Präferenzverarbeitung für die bedingte Übergabe, bei der eine Ausführung einer bedingten Übergabe des Kommunikationselements oder der Kommunikationsfunktion an einen anderen Netzwerkbereich gegenüber anderen Maßnahmen zum Halten der Verbindung des Kommunikationselements oder der Kommunikationsfunktion mit dem Kommunikationsnetzwerk priorisiert wird.

2. Vorrichtung nach Anspruch 1, wobei der mindestens eine Speicher und die Anweisungen ferner dazu ausgelegt sind, die Vorrichtung mit der mindestens einen Verarbeitungsschaltung zu Folgendem zu veranlassen:
Weiterleiten der Übergabeauslegungsinformationen in einer Übergabeanweisungssignalisierung, die dem Kommunikationselement oder der Kommunikationsfunktion eine Liste von mindestens einem Zielnetzwerkbereichskandidaten für die bedingte Übergabeprozedur bereitstellt, oder
Weiterleiten der Übergabeauslegungsinformationen in einer separaten Signalisierung, die von der Übergabeanweisungssignalisierung unabhängig ist.

3. Vorrichtung zur Verwendung durch ein Kommunikationselement oder eine Kommunikationsfunktion in einem ersten Netzwerkbereich eines Kommunikationsnetzwerks, wobei der erste Netzwerkbereich von einem ersten Kommunikationsnetzwerksteuerelement oder einer ersten Kommunikationsnetzwerksteuerfunktion gesteuert wird, wobei die Vorrichtung Folgendes umfasst
mindestens eine Verarbeitungsschaltung, und
mindestens einen Speicher zum Speichern von Anweisungen, die von der Verarbeitungsschaltung auszuführen sind,
wobei der mindestens eine Speicher und die Anweisungen dazu ausgelegt sind, die Vorrichtung mit der mindestens einen Verarbeitungsschaltung mindestens zu Folgendem zu veranlassen:
Durchführen einer Verarbeitung für eine bedingte Übergabeprozedur des Kommunikationselements oder der Kommunikationsfunktion, das bzw. die vom ersten Kommunikationsnetzwerksteuerelement oder der ersten Kommunikationsnetzwerksteuerfunktion bedient wird,
Empfangen von Übergabeauslegungsinformationen, die definieren, wie die bedingte Übergabeprozedur am Kommunikationselement oder an der Kommunikationsfunktion auszuführen ist, vom ersten Kommunikationsverbindungssteuerelement oder von der ersten Kommunikationsverbindungssteuerfunktion und Verarbeiten derselben beim Verarbeiten für die bedingte Übergabeprozedur, wobei die Übergabeauslegungsinformationen Anweisungen für das Kommunikationselement oder die Kommunikationsfunktion beinhalten, und in dem Fall, in dem ein Strahlfehler als das Problem mit dem Funklink oder der physischen Schicht bestimmt wird, Überspringen einer Strahlfehlerwiederherstellungsprozedur und stattdessen sofortiges Starten der bedingten Übergabeprozedur bei der Präferenzverarbeitung für die bedingte Übergabe auf Basis der Übergabeauslegungsinformationen,
Bestimmen, ob ein Problem mit dem Funklink oder der physischen Schicht vorhanden ist, und
in dem Fall, in dem das Vorhandensein des Problems mit dem Funklink oder der physischen Schicht für die Kommunikationsverbindung zum ersten Netzwerkbereich bestimmt wird, Durchführen einer Präferenzverarbeitung für die bedingte Übergabe, bei der eine Ausführung einer bedingten Übergabe des Kommunikationselements oder der Kommunikationsfunktion an einen anderen Netzwerkbereich gegenüber anderen Maßnahmen zum Halten der Verbindung des Kommunikationselements oder der Kommunikationsfunktion mit dem Kommunikationsnetzwerk priorisiert wird.

4. Vorrichtung nach Anspruch 3, wobei der mindestens eine Speicher und die Anweisungen ferner dazu ausgelegt sind, die Vorrichtung mit der mindestens einen Verarbeitungsschaltung zu Folgendem zu veranlassen:
Empfangen der Übergabeauslegungsinformationen in einer Übergabeanweisungssignalisierung vom ersten Kommunikationsverbindungssteuerelement oder von der ersten Kommunikationsverbindungssteuerfunktion, die dem Kommunikationselement oder der Kommunikationsfunktion eine Liste von mindestens einem Zielnetzwerkbereichskandidaten für die bedingte Übergabeprozedur bereitstellt, oder
Empfangen der Übergabeauslegungsinformationen in einer separaten Signalisierung, die von der Übergabeanweisungssignalisierung unabhängig ist.

5. Verfahren zur Verwendung in einem ersten Kommunikationsnetzwerksteuerelement oder einer ersten Kommunikationsnetzwerksteuerfunktion, das bzw. die dazu ausgelegt ist, eine Kommunikationsverbindung von mindestens einem Kommunikationselement oder einer Kommunikationsfunktion in einem ersten Netzwerkbereich eines Kommunikationsnetzwerks zu steuern, wobei das Verfahren Folgendes umfasst
Durchführen einer Verarbeitung für eine bedingte Übergabeprozedur des Kommunikationselements oder der Kommunikationsfunktion, das bzw. die vom ersten Kommunikationsnetzwerksteuerelement oder der ersten Kommunikationsnetzwerksteuerfunktion bedient wird,
Weiterleiten von Übergabeauslegungsinformationen, die definieren, wie die bedingte Übergabeprozedur am Kommunikationselement oder an der Kommunikationsfunktion auszuführen ist, beim Verarbeiten für die bedingte Übergabeprozedur an das Kommunikationselement oder die Kommunikationsfunktion, wobei die Übergabeauslegungsinformationen Anweisungen für das Kommunikationselement oder die Kommunikationsfunktion beinhalten, wobei die Übergabeauslegungsinformationen in dem Fall, in dem ein Strahlfehler als das Problem mit dem Funklink oder der physischen Schicht bestimmt wird, das Überspringen einer Strahlfehlerwiederherstellungsprozedur als eine Präferenzverarbeitung für die bedingte Übergabe und stattdessen das sofortige Starten der bedingten Übergabeprozedur auf Basis der Übergabeauslegungsinformationen definieren
Bestimmen, ob ein Problem mit dem Funklink oder der physischen Schicht vorhanden ist, und
in dem Fall, in dem das Vorhandensein des Problems mit dem Funklink oder der physischen Schicht für die Kommunikationsverbindung zum ersten Netzwerkbereich bestimmt wird, Durchführen einer Präferenzverarbeitung für die bedingte Übergabe, bei der eine Ausführung einer bedingten Übergabe des Kommunikationselements oder der Kommunikationsfunktion an einen anderen Netzwerkbereich gegenüber anderen Maßnahmen zum Halten der Verbindung des Kommunikationselements oder der Kommunikationsfunktion mit dem Kommunikationsnetzwerk priorisiert wird.

6. Verfahren nach Anspruch 5, das ferner Folgendes umfasst Weiterleiten der Übergabeauslegungsinformationen in einer Übergabeanweisungssignalisierung, die eine Liste von mindestens einem Zielnetzwerkbereichskandidaten für die bedingte Übergabeprozedur an das Kommunikationselement oder die Kommunikationsfunktion bereitstellt, oder
Weiterleiten der Übergabeauslegungsinformationen in einer separaten Signalisierung, die von der Übergabeanweisungssignalisierung unabhängig ist.

7. Verfahren nach Anspruch 5 oder 6, wobei die Übergabeauslegungsinformationen ferner Folgendes als eine Präferenzverarbeitung für die bedingte Übergabe definieren,
Prüfen, ob ein Verbindungsqualitätsmaß, das eine Kommunikationsverbindung zu einem Netzwerkbereichskandidaten für die bedingte Übergabeprozedur betrifft, gleich oder besser als ein vorbestimmter Schwellwert ist, und
in dem Fall, in dem das Verbindungsqualitätsmaß, das die Kommunikationsverbindung zum Netzwerkbereichskandidaten für die bedingte Übergabeprozedur betrifft, gleich oder besser als der vorbestimmte Schwellwert ist, Starten der bedingten Übergabeprozedur auf Basis der Übergabeauslegungsinformationen.

8. Verfahren nach Anspruch 7, wobei in dem Fall, in dem das Verbindungsqualitätsmaß, das die Kommunikationsverbindung zu mehr als einem Netzwerkbereichskandidaten betrifft, gleich oder besser als der vorbestimmte Schwellwert ist, ein Netzwerkbereichskandidat mit der höchsten Verbindungsqualität für die bedingte Übergabeprozedur auszuwählen ist.

9. Verfahren nach Anspruch 5 oder 6, wobei die Übergabeauslegungsinformationen ferner Folgendes als eine Präferenzverarbeitung für die bedingte Übergabe definieren,
Prüfen, ob mindestens ein Strahl zum ersten Netzwerkbereich vorhanden ist, der ein Verbindungsqualitätsmaß für eine Kommunikationsverbindung zum ersten Netzwerkbereich bereitstellt, das gleich oder besser als ein vorbestimmter Schwellwert ist, und
in dem Fall, in dem kein Strahl zum ersten Netzwerkbereich vorhanden ist, der ein Verbindungsqualitätsmaß für eine Kommunikationsverbindung zum ersten Netzwerkbereich bereitstellt, das gleich oder besser als der vorbestimmte Schwellwert ist, Starten der bedingten Übergabeprozedur auf Basis der Übergabeauslegungsinformationen.

## Revendications

1. Appareil destiné à être utilisé par un premier élément ou une première fonction de contrôle de réseau de communication, configuré pour contrôler une connexion de communication d'au moins un élément ou une fonction de communication dans une première zone de réseau d'un réseau de communication, l'appareil comprenant
au moins une circuiterie de traitement, et
au moins une mémoire pour stocker des instructions à exécuter par la circuiterie de traitement,
dans lequel l'au moins une mémoire et les instructions sont configurées pour, avec l'au moins une circuiterie de traitement, amener l'appareil, au moins :
à effectuer un traitement pour une procédure de transfert conditionnel de l'élément ou de la fonction de communication desservie par le premier élément ou la première fonction de contrôle de réseau de communication,
à transférer, à l'élément ou à la fonction de communication, au cours du traitement pour la procédure de transfert conditionnel, des informations de configuration de transfert définissant la manière dont la procédure de transfert conditionnel doit être exécutée au niveau de l'élément ou de la fonction de communication, dans lequel les informations de configuration de transfert comportent des instructions pour l'élément ou la fonction de communication, dans lequel les informations de configuration de transfert définissent, comme traitement de préférence de transfert conditionnel, dans le cas où une défaillance de faisceau est déterminée comme le problème de liaison radio ou de couche physique,
de sauter une procédure de récupération de défaillance de faisceau et de commencer plutôt immédiatement la procédure de transfert conditionnel sur la base des informations de configuration de transfert,
à déterminer s'il y a un problème de liaison radio ou de couche physique, et
dans le cas où il est déterminé qu'il y a un problème de liaison radio ou de couche physique pour la connexion de communication à la première zone de réseau, à effectuer un traitement de préférence de transfert conditionnel dans lequel une exécution d'un transfert conditionnel de l'élément ou de la fonction de communication vers une autre zone de réseau est prioritaire par rapport à d'autres mesures pour maintenir la connexion de l'élément ou de la fonction de communication avec le réseau de communication.

2. Appareil selon la revendication 1, dans lequel l'au moins une mémoire et les instructions sont en outre configurées pour, avec l'au moins une circuiterie de traitement, amener l'appareil, au moins :
à transférer les informations de configuration de transfert dans une signalisation d'instruction de transfert fournissant une liste d'au moins une zone de réseau cible candidate pour la procédure de transfert conditionnel à l'élément ou à la fonction de communication, ou
à transférer les informations de configuration de transfert dans une signalisation distincte indépendante de la signalisation d'instruction de transfert.

3. Appareil destiné à être utilisé par un élément ou une fonction de communication communiquant dans une première zone de réseau d'un réseau de communication, la première zone de réseau étant contrôlée par un premier élément ou une première fonction de contrôle de réseau de communication, l'appareil comprenant
au moins une circuiterie de traitement, et
au moins une mémoire pour stocker des instructions à exécuter par la circuiterie de traitement,
dans lequel l'au moins une mémoire et les instructions sont configurées pour, avec l'au moins une circuiterie de traitement, amener l'appareil, au moins :
à effectuer un traitement pour une procédure de transfert conditionnel de l'élément ou de la fonction de communication desservie par le premier élément ou la première fonction de contrôle de réseau de communication,
à recevoir du premier élément ou de la première fonction de contrôle de connexion de communication et à traiter, au cours du traitement pour la procédure de transfert conditionnel, des informations de configuration de transfert définissant la manière dont la procédure de transfert conditionnel doit être exécutée au niveau de l'élément ou de la fonction de communication, dans lequel les informations de configuration de transfert comportent des instructions pour l'élément ou la fonction de communication, et dans le cas où une défaillance de faisceau est déterminée comme le problème de liaison radio ou de couche physique, indiquent de sauter une procédure de récupération de défaillance de faisceau et de commencer plutôt immédiatement la procédure de transfert conditionnel dans le traitement de préférence de transfert conditionnel sur la base des informations de configuration de transfert,
à déterminer s'il y a un problème de liaison radio ou de couche physique, et
dans le cas où il est déterminé qu'il y a un problème de liaison radio ou de couche physique pour la connexion de communication à la première zone de réseau, à effectuer un traitement de préférence de transfert conditionnel dans lequel une exécution d'un transfert conditionnel de l'élément ou de la fonction de communication vers une autre zone de réseau est prioritaire par rapport à d'autres mesures pour maintenir la connexion de l'élément ou de la fonction de communication avec le réseau de communication.

4. Appareil selon la revendication 3,
dans lequel l'au moins une mémoire et les instructions sont en outre configurées pour, avec l'au moins une circuiterie de traitement, amener l'appareil, au moins :
à recevoir les informations de configuration de transfert dans une signalisation d'instruction de transfert du premier élément ou de la première fonction de contrôle de connexion de communication, fournissant une liste d'au moins une zone de réseau cible candidate pour la procédure de transfert conditionnel à l'élément ou à la fonction de communication, ou
à recevoir les informations de configuration de transfert dans une signalisation distincte indépendante de la signalisation d'instruction de transfert.

5. Procédé destiné à être utilisé dans un premier élément ou une première fonction de contrôle de réseau de communication configuré pour contrôler une connexion de communication d'au moins un élément ou une fonction de communication dans une première zone de réseau d'un réseau de communication, le procédé comprenant les étapes suivantes :
effectuer un traitement pour une procédure de transfert conditionnel de l'élément ou de la fonction de communication desservie par le premier élément ou la première fonction de contrôle de réseau de communication, transférer à l'élément ou à la fonction de communication, au cours du traitement pour la procédure de transfert conditionnel, informations de configuration de transfert définissant la manière dont la procédure de transfert conditionnel doit être exécutée au niveau de l'élément ou de la fonction de communication, dans lequel les informations de configuration de transfert comportent des instructions pour l'élément ou la fonction de communication, dans lequel les informations de configuration de transfert définissent, comme traitement de préférence de transfert conditionnel, dans le cas où une défaillance de faisceau est déterminée comme le problème de liaison radio ou de couche physique,
de sauter une procédure de récupération de défaillance de faisceau et de commencer plutôt immédiatement la procédure de transfert conditionnel sur la base des informations de configuration de transfert
déterminer s'il y a un problème de liaison radio ou de couche physique, et
dans le cas où il est déterminé qu'il y a un problème de liaison radio ou de couche physique pour la connexion de communication à la première zone de réseau, effectuer un traitement de préférence de transfert conditionnel dans lequel une exécution d'un transfert conditionnel de l'élément ou de la fonction de communication vers une autre zone de réseau est prioritaire par rapport à d'autres mesures pour maintenir la connexion de l'élément ou de la fonction de communication avec le réseau de communication.

6. Procédé selon la revendication 5, comprenant en outre les étapes suivantes :
transférer les informations de configuration de transfert dans une signalisation d'instruction de transfert fournissant une liste d'au moins une zone de réseau cible candidate pour la procédure de transfert conditionnel à l'élément ou à la fonction de communication, ou
transférer les informations de configuration de transfert dans une signalisation distincte indépendante de la signalisation d'instruction de transfert.

7. Procédé selon la revendication 5 ou 6, dans lequel les informations de configuration de transfert définissent en outre, comme traitement de préférence de transfert conditionnel,
de vérifier si une mesure de qualité de connexion liée à une connexion de communication à une zone de réseau candidate pour la procédure de transfert conditionnel est égale ou meilleure qu'un seuil prédéterminé, et
dans le cas où la mesure de qualité de connexion liée à la connexion de communication à la zone de réseau candidate pour la procédure de transfert conditionnel est égale ou meilleure que le seuil prédéterminé, de commencer la procédure de transfert conditionnel sur la base des informations de configuration de transfert.

8. Procédé selon la revendication 7, dans lequel dans le cas où la mesure de qualité de connexion liée à la connexion de communication à plus d'une zone de réseau candidate est égale ou meilleure que le seuil prédéterminé, une zone de réseau candidate ayant la plus haute qualité de connexion doit être sélectionnée pour la procédure de transfert conditionnel.

9. Procédé selon la revendication 5 ou 6, dans lequel les informations de configuration de transfert définissent en outre, comme traitement de préférence de transfert conditionnel,
de vérifier si au moins un faisceau vers la première zone de réseau est présent et fournit une mesure de qualité de connexion pour une connexion de communication à la première zone de réseau qui est égale ou meilleure qu'un seuil prédéterminé, et
dans le cas où il n'y a pas de faisceau vers la première zone de réseau fournissant une mesure de qualité de connexion pour une connexion de communication à la première zone de réseau qui est égale ou meilleure que le seuil prédéterminé, de commencer la procédure de transfert conditionnel sur la base des informations de configuration de transfert.
